# EUROPÄISCHE PATENTSCHRIFT

(11) **EP 3 746 668 B1**
(45) Veröffentlichungstag und Bekanntmachung des Hinweises auf die Patenterteilung: **16.08.2023**
(21) Anmeldenummer: 19706868.7
(22) Anmeldetag: 30.01.2019
(51) Int. Cl.: F16C 43/06, F16C 19/06, F16C 33/38

(54) **KUGELLAGER-KÄFIG UND KUGELLAGER**
BALL BEARING CAGE AND BALL BEARING
CAGE DE ROULEMENT À BILLES ET ROULEMENT À BILLES

(30) Priorität: 01.02.2018 DE 102018102275
(43) Veröffentlichungstag der Anmeldung: 09.12.2020
(73) Patentinhaber: Gebrüder Reinfurt GmbH & Co. KG, 97222 Rimpar (DE)
(72) Erfinder: NIEDERMEIER, Herbert, 97490 Poppenhausen (DE); ARMANI, Daniel, 97294 Burggrumbach (DE)
(74) Vertreter: Heyerhoff Geiger & Partner Patentanwälte PartGmbB
(86) Internationale Anmeldenummer: PCT/DE2019/100097
(87) Internationale Veröffentlichungsnummer: WO 2019/149318

(56) Entgegenhaltungen:
- EP-A1- 0 220 755
- WO-A1-2011/098357
- AT-B- 265 762
- DE-A1-102010 034 962
- DE-B4-102014 008 763
- DE-U1- 8 903 768
- JP-A- H06 165 790
- JP-A- H09 229 073
- JP-A- 2000 291 662
- JP-A- 2002 147 463
- US-A- 1 507 586

## Beschreibung

Die Erfindung betrifft einen Kugellager-Käfig und ein Kugellager mit einem solchen Kugellager-Käfig.

Wälzlager sind Lager, bei denen zwischen einem sogenannten Innenring und einem Außenring rollende Körper, d. h. Wälzkörper, einen Reibungswiderstand verringern. Sie dienen als Fixierung von Achsen und Wellen, wobei sie, je nach Bauform, radiale und/oder axiale Kräfte aufnehmen und gleichzeitig eine Rotation der Welle oder der so auf einer Achse gelagerten Bauteile, beispielsweise ein Rad, ermöglichen.

Kugellager sind eine Untergruppe solcher Wälzlager, bei denen Kugeln als Wälzkörper dienen (andere Wälzlageruntergruppen sind beispielsweise Zylinderrollenlager, Kegelrollenlager, Nadellager Tonnenlager oder Toroidalrollenlager - mit jeweils entsprechenden Wälzkörpern, wie Zylinderrollen, Kegelrollen usw.).

Kugellager-Käfige zum Anordnen der einzelnen Kugeln eines Kugellagers bzw. eines Kugelsatzes (d. h., alle in einer Umfangsreihe in einem Kugellager angeordnete Kugeln) eines Kugellagers sind ebenfalls bekannt und haben die Aufgabe, die Kugeln (des Kugelsatzes in dem Kugellager) in Umfangsrichtung des Kugellagers in annähernd gleichen Abständen auf Position zu halten. Dabei bzw. dazu sind die Kugeln jeweils in durch den Kugellager-Käfig ausgebildeten sogenannten Kugeltaschen aufgenommen.

Verschiedene Ausführungen von solchen Kugellager-Käfigen sind auch bekannt, wie beispielsweise Fensterkäfige (gelegentlich auch Massivkäfige genannt) und ein- oder zweiteilige Schnappkäfige.

Bei einem Fensterkäfig eines Kugellagers sind die Wälzkörper, d. h. die Kugeln, in durch den Fensterkäfig - in der Regel einstückig - ausgebildeten geschlossenen Profilen, d. h., den Kugeltaschen, eingesetzt.

Hingegen werden die Kugeln bei einem Schnappkäfig eines Kugellagers durch - an einem ringförmigen Körper, einem sogenannten Käfigrücken, axial auskragend und im Wesentlichen gleichmäßig in Umfangsrichtung des Kugellagers verteilt angeordnete - Stege in Position gehalten. Jeweils zwei in Umfangsrichtung des Kugellagers benachbart angeordnete Stege bilden dabei bei einem solchen Schnappkäfig eine Kugeltasche für die Aufnahme einer bzw. der Kugel aus, deren - weil nicht als geschlossenes Profil ausgebildet - Schnappöffnung, d. h. der "freie" Abstand zwischen zwei in Umfangsrichtung des Kugellagers benachbarten Stegenden, im Regelfall kleiner als ein jeweiliger Kugeldurchmesser der in der Kugeltasche aufgenommenen Kugel ist (der mittlere Abstand jeweils zwei in Umfangsrichtung benachbarter Stege in Umfangrichtung entspricht in etwa dem Kugeldurchmesser), wodurch die Kugeltasche bzw. der Kugellager-Käfig - bei einer Montage des Kugellagers - über die Kugel "einschnappt".

Zweiteilige Schnappkäfige sehen zusätzlich zu dem - dann ersten - Käfigteil, d. h., dem mit den auskragenden Stegen versehenen Käfigrücken, ein ein Gegenstück dazu bildendes, zweites Käfigteil vor, welches - ebenfalls meist als ringförmiges Teil ausgebildet - die Schnappöffnungen des ersten Käfigteils "schließt/verriegelt" - und so das erste Käfigteil verstärkt/versteift.

Bei derartigen Kugellager-Käfigen mit solchen Kugeltaschen hat ein sogenanntes Kugeltaschenspiel eine große Bedeutung bezüglich eines Verschleißverhaltens des Kugellager-Käfigs. Das Kugeltaschenspiel ist als axiale Beweglichkeit der Kugel und die Beweglichkeit der Kugel in Umfangsrichtung des Kugellager-Käfigs in der Kugeltasche definiert. Anschaulich gesehen bzw. vereinfacht ausgedrückt, bildet die Kugeltasche in etwa den - maximalen - Querschnitt der Kugel nach, so ist das Kugeltaschenspiel deren axiale Vergrößerung ("vergrößerte (Taschen-)Breite") und/oder Vergrößerung in Umfangsrichtung ("Langloch") über den in etwa maximalen Kugelquerschnitt hinaus.

Durch sogenannte Fluchtungsfehler der Lager bzw. der Kugellager in einem Gehäuse bzw. bei Verkippungen von Lagerstellen können sich die Kugeln eines Kugelsatzes mit unterschiedlichen Geschwindigkeiten bewegen. Dies führt dazu, dass sich vor- oder nacheilende Kugeln von der Position der Kugeltasche wegbewegen wollen und dementsprechend in Umfangsrichtung des Kugellagers Kräfte auf den Kugellager-Käfig ausüben, die - im Falle eines Schnappkäfigs - von den Stegen und dem Käfigrücken aufgefangen werden müssen.

Dies kann dort zu übermäßigem Verschleiß in den Kugeltaschen des Schnappkäfigs eines Kugellagers führen - und im ungünstigsten Fall zu einem Bruch des Käfigrückens. Zum Zeitpunkt eines solchen Käfigrückenbruches wirkt der (Schnapp-)Käfig durch die auf ihn einwirkenden Fliehkräfte wie eine Backenbremse, so dass das Lager bzw. Kugellager augenblicklich ausfällt.

Aus der DE 699 25 976 T2 ist ein Radial-Rillenkugellager mit einem zweiteiligen Schnappkäfig bekannt. Dieser zweiteilige Schnappkäfig verfügt über zwei baugleiche Einzel- bzw. Käfigteile/-hälften, wobei die beiden Käfighälften nach der Montage im Kugelsatz gegeneinander einschnappen - und so die Schnappöffnungen der Kugeltaschen verriegelt bzw. geschlossen werden.

Nachteil dieses Käfigdesigns des aus der DE 699 25 976 T2 bekannten zweiteiligen Schnappkäfigs ist jedoch, dass es aus Fertigungsgründen nicht in ein Miniaturkugellager, wie es beispielsweise bei Dentalanwendungen, insbesondere bei Dentalturbinen, Verwendung findet, eingebaut werden kann. Ein Schnappkäfig für ein Kugellager einer Dentalturbine weist - beispielsweise - Abmessungen von ca. 4 mm Innendurchmesser, 5 mm Außendurchmesser und ca. 1,6 mm Breite auf. Für diese Dimensionierung eines dort verwendbaren Käfigs ist der in DE 699 25 976 T2 beschriebene Schnappmechanismus bzw. das dort beschriebene Käfigdesign nicht realisierbar.

Aus der AT265762B ist ein Radial-Rillenkugellager mit einem zweiteiligen Käfig gemäß dem Oberbegriff des Anspruchs 1 bekannt, wobei ein Abstand jeweils zwei in der Umfangsrichtung benachbarter Stege des Käfigs in Umfangrichtung in etwa der Summe aus dem zweifachen Kugeldurchmesser und einer Breite des Steges in der Umfangsrichtung entspricht.

Der Erfindung liegt die Aufgabe zugrunde, die Nachteile und Einschränkungen im Stand der Technik zu überwinden. Insbesondere liegt der Erfindung die Aufgabe zugrunde, einen Kugellager-Käfig mit verbessertem Verschleißverhalten und einer konstruktiven Ausgestaltung bereitzustellen, durch welche Ausgestaltung bei verkipptem Lauf des Kugellagers deutlich niedrigere Belastungen auf den Käfigrücken wirken, so dass ein Käfigrückenbruch vermieden werden kann.

Insbesondere auch liegt der Erfindung die Aufgabe zugrunde, einen Kugellager-Käfig mit realisierbaren Käfigabmessungen für den (Anwendungs-)Bereich von Miniaturkugellager, insbesondere für Dentalanwendungen, bereitzustellen.

Diese Aufgaben werden durch einen Kugellager-Käfig gemäß Anspruch 1 sowie ein Kugellager mit den Merkmalen gemäß Anspruch 8 gelöst.

Der Kugellager-Käfig, d. h., ein zweiteiliger Kugellager-Käfig (vereinfacht im Folgenden meist nur als "der Kugellager-Käfig" bezeichnet), weist zwei, insbesondere zumindest im Wesentlichen identische, Käfigteile auf, welche - bei montiertem Kugellager-Käfig - eine geradzahlige Mehrzahl von Kugeltaschen zur Aufnahme von einer entsprechenden Anzahl von Kugeln mit einem vorgebbaren Kugeldurchmesser ausbilden. D. h., jede - (bei montiertem Kugellager-Käfig) ausgebildete - Kugeltasche kann bzw. dient der Aufnahme einer Kugel.

"Zweiteilig" bezieht sich dabei (nur) auf die zwei Käfigteile (als Teile des Kugellager-Käfigs) - und schließt nicht aus, dass der Kugellager-Käfig (selbst bzw. insgesamt) weitere Teile und/oder die Käfigteile jeweils selbst auch weitere Teile aufweist bzw. aufweisen.

Jedes Käfigteil dieses Kugellager-Käfigs weist ferner einen ringförmigen Körper ("Käfigrücken") auf, an welchem - in Umfangsrichtung des Käfigteils bzw. des Kugellager-Käfigs - im Wesentlichen gleichmäßig verteilte, insbesondere im Wesentlichen gleich ausgebildete, Stege zur Ausbildung der Kugeltaschen angeordnet sind.

Vereinfacht und anschaulich ausgedrückt, an dem ringförmigen Körper bzw. Käfigrücken des jeweiligen Käfigteils sind jeweils - in der Umfangsrichtung gleichverteilt - axial (d. h., die Erstreckung einer Kugeltasche in Axialrichtung des zweiteiligen Kugellager-Käfigs, bzw. in Breitenrichtung des Kugellager-Käfigs) auskragende Stege angeordnet, welche die durch sie ausbildbaren Kugeltaschen zumindest im Wesentlichen in der Umfangsrichtung begrenzen.

Die Stege können insbesondere eine bikonkave Form aufweisen, dessen Wölbungen/Krümmungen (nach "innen") der Form der Kugeln ("Kreis/-bogen") angepasst sind.

Ein Abstand - in der Umfangsrichtung des Käfigteils bzw. des Kugellager-Käfigs - zwischen jeweils zwei in der Umfangsrichtung benachbarten Stege entspricht dabei in etwa der Summe aus dem zweifachen Kugeldurchmesser und einer Breite des bzw. eines solchen Steges in der Umfangsrichtung.

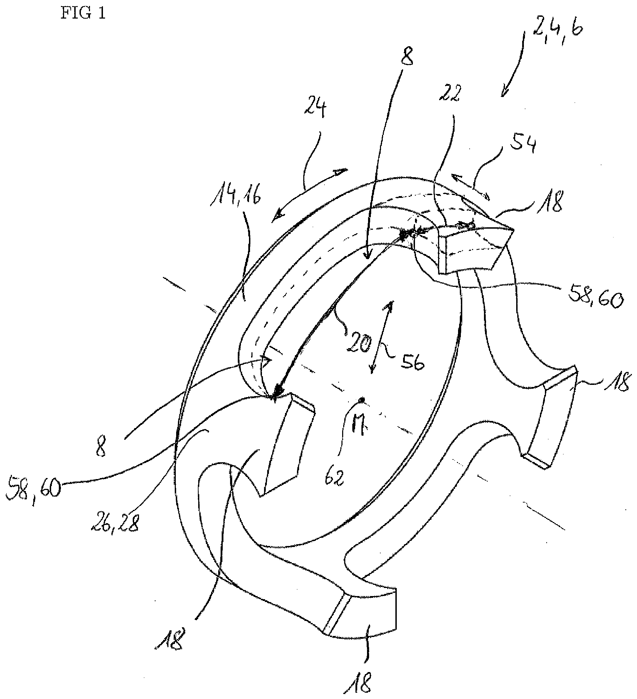

Dieser "Abstand" zwischen den zwei in der Umfangsrichtung benachbarten Stegen bemisst sich, d. h., kann gemessen werden, insbesondere an einer axialen, d. h., die Erstreckung einer Kugeltasche in Axialrichtung des zweiteiligen Kugellager-Käfigs, Mitte einer Kugeltasche sowie - in etwa - an einer mittleren radialen, d. h., die Erstreckung eines Steges radial hin zu bzw. weg von einem Mittelpunkt M des zweiteiligen Kugellager-Käfigs, Höhe eines Steges bzw. der Stege - und ist die Länge des entsprechenden, sich zwischen den zwei Stegen diesbezüglich ausbildenden Kreisbogens (vgl. FIG 1).

Die "Breite" eines Steges meint insbesondere dessen Erstreckung, anschaulich gesehen eine (Kreisbogen-)Länge, in der Umfangsrichtung des zweiteiligen Kugellager-Käfigs (vgl. FIG 1).

Mit "in etwa" der Summe kann zum Ausdruck gebracht werden, dass bei der Summierung/Bemessung des Abstandes - aus dem zweifachen Kugeldurchmesser und der Breite des bzw. eines solchen Steges in Umfangsrichtung - auch Toleranzen auftreten können, insbesondere aber auch ein Kugeltaschenspiel miteingerechnet bzw. berücksichtigt werden kann.

Anschaulich und vereinfacht ausgedrückt, jeweils zwei in der Umfangsrichtung benachbarte Stege des Käfigteils sind - in der Umfangsrichtung - derart (weit) beabstandet bzw. voneinander entfernt (an dem ringförmigen Körper bzw. an dem Käfigrücken des jeweiligen Käfigteils angeordnet), dass sich zwischen ihnen (bei montiertem Kugellager-Käfig) zwei Kugeltaschen ausbilden können (deshalb auch die geradzahlige Mehrzahl von Kugeltaschen bei dem zweiteiligen Kugellager-Käfig), nämlich dann bzw. nämlich dadurch, dass - wenn die zwei Käfigteile bei bzw. nach einer Montage des zweiteiligen Kugellager-Käfigs gegeneinander in einen Kugelsatz einschnappen - ein Steg des einen Käfigteils (in etwa mittig) zwischen den zwei in der Umfangsrichtung benachbarten Stegen des anderen Käfigteils axial "eintaucht" bzw. zu liegen kommt.

Anders ausgedrückt, die Stege des einen Käfigteils und die Stege des anderen Käfigteils begrenzen - im montierten Zustand des Kugellager-Käfigs - wechselseitig bzw. sich jeweils abwechselnd die einzelnen Kugeltaschen bei dem Kugellager-Käfig.

Der Kugellager-Käfig, d. h., der zweiteilige Kugellager-Käfig, stellt so zwei, insbesondere zumindest im Wesentlichen identische, Käfigteile ("Käfighälften") zur Verfügung, deren beide Käfigteile/-hälften - bei einer Montage des Kugellager-Käfigs - gegeneinander in einen Kugelsatz eines Kugellagers einschnappen können ("(schnapp-)verriegeln/ "Schnappverriegelung"), wobei sich so die - geradzahligen - Kugeltaschen des Kugellager-Käfigs - nach der Montage des Kugellager-Käfigs bzw. der Käfighälften im Kugellager - ausbilden.

Stellt der Kugellager-Käfig, d. h., der zweiteilige Kugellager-Käfig, diese zwei Käfigteile/-hälften als gegeneinander in den Kugelsatz "einschnappbare" Käfigteile-/hälften zur Verfügung ("Schnappkäfig"), so ermöglicht dies, dass diese "einschnappbaren" Käfigteile-/hälften sich (weiter noch) in der Umfangsrichtung des Kugellager-Käfigs bzw. des Kugellagers gegeneinander variabel bewegen können.

Dadurch können sich voreilende Kugeln eines verkippt laufenden Kugelsatzes in der Umfangsrichtung einen zusätzlichen Freiraum schaffen (anders als bei den bekannten "einstückig gebildeten", fest geschlossenen, die Kugel aufnehmenden Profilen/Kugeltaschen bei Fensterkäfigen und bei den bekannten ein-/zweiteiligen Schnappkäfigen mit den "einstückig gebildeten", (in ihrer Breite und Länge) festen Kugeltaschen) - und dadurch Belastungen auf die Käfigrücken und die Kugeltaschen der beiden Käfighälften minimiert werden.

Gleichzeitig ist auch ein Achsversatz der beiden Käfigteile/- hälften bei Verkippung eines diesbezüglichen Kugellagers möglich, wobei beide Käfigteile/-hälften jeweils auf einer Innenring- bzw. Außenringschulter des jeweiligen Innen- bzw. Außenrings des Kugellagers geführt werden können, so dass auch hierdurch niedrigere Belastungen für die Käfigrücken und Kugeltaschen entstehen.

Durch die Tatsache, dass jedes Käfigteil/-hälfte des Kugellager-Käfigs separat auf einer (Innen-/Außenring-)Schulter geführt werden kann, können auftretende Schwingungen auch in vorteilhafter Weise gedämpft werden.

Auch erweist sich bei dem Kugellager-Käfig von Vorteil, dass sein Design es ermöglicht, diesen auch in Miniaturkugellagern einzusetzen, wie üblicherweise Kugellager für Dentalanwendungen, beispielsweise in Dentalturbinen.

Die (Schnapp-)Verriegelung der beiden Käfigteile-/hälften des (zweiteiligen) Kugellager-/Schnappkäfigs kann über eine - im Vergleich zu einem einteiligen Schnappkäfig - engere Schnappöffnung realisiert werden, so dass die Gefahr einer Demontage während eines Betriebs des Kugellager-Käfigs weiter minimiert wird.

Das Kugellager weist - neben dem (zweiteiligen) Kugellager-Käfig - einen inneren Laufring, einen äußeren Laufring und eine Vielzahl von Kugeln mit dem vorgebbaren Kugeldurchmesser auf, wobei die Vielzahl der Kugeln der Anzahl der durch den (zweiteiligen) Kugellager-Käfig - bei montiertem Kugellager-Käfig - ausgebildeten Kugeltaschen entsprechen ("Kugelsatz") und jeweils eine von den Kugeln (des Kugelsatzes) in eine von den Kugeltaschen aufgenommen ist.

Ein solches Kugellager - mit dem (zweiteiligen) Kugellager-Käfig - kann insbesondere ein Radial-Rillenkugellager, ein Angularkontaktlager, ein Axial-Rillenkugellager, ein Schrägkugellager, ein Vierpunktlager oder ein Schulterkugellager sein.

Der äußere Laufring und/oder der innere Laufring können beispielsweise aus Chromstahl gefertigt sein, wie beispielsweise aus 100Cr6 (Werkstoff-Nr. 1.3505), ein Stahl mit einem Gehalt von ca. 1 % Kohlenstoff und 1,5 % Chrom. Weitere mögliche Stähle - für den äußeren und/oder inneren Laufring - sind zum Beispiel 100CrMn6 und 100CrMo6; die Legierungselemente Mangan (Mn) und Molybdän (Mo) dienen hier der besseren Durchhärtbarkeit.

Für Anwendungen des Kugellagers in korrosiver Umgebung können auch die hochlegierten Stähle X65Cr13 (Werkstoff-Nr. 1.4037) und X105CrMo17 (Werkstoff-Nr. 1.4125) oder X30CrMoN15-1 (Werkstoff-Nr. 1.4108) - bei dem inneren und/oder äußeren Laufring - verwendet werden. Letzterer Stahl kann, zumindest für einige Tage, auch im menschlichen Organismus zum Einsatz kommen.

Für besondere Betriebsbedingungen kann das Kugellager auch als Hybridlager (zwei Werkstoffe), bei denen die Lagerringe bzw. Laufkränze, aus Stahl und die Kugeln aus Keramik bestehen, zum Beispiel bei Spindellagern für Werkzeugmaschinen, oder als Keramiklager, bei denen sowohl die Laufkränze, als auch die Kugeln aus Keramik bestehen, oder auch als Kunststofflager mit Kugeln aus Glas oder Keramik gegen aggressive Säuren oder Laugen in der Chemie- und Lebensmittelindustrie vorgesehen sein.

Auch kann vorgesehen sein, dass der Kugellager-Käfig bei dem Kugellager als Innenring-geführter Käfig oder als Außenringgeführter Käfig, insbesondere als Innenring-geführter Käfig ausgeführt ist. Dabei gleitet ein Außenumfang des Kugellager-Käfigs an einem Innenumfang des äußeren Laufrings bzw. ein Innenumfang des Kugellager-Käfigs an einem Außenumfang des inneren Laufrings.

Des Weiteren ist vorgesehen, dass zumindest ein Käfigteil, insbesondere jedes Käfigteil, in Axialrichtung eine konische Außenfläche, insbesondere mit einem Konuswinkel zwischen in etwa 2° und in etwa 20°, insbesondere zwischen in etwa 7° und in etwa 12°, aufweist. Dadurch können sich die Kalotten-Nasen Drehzahl-bedingt durch die im Kugellager auftretenden Fliehkräfte nach außen aufbiegen und es kann verhindert werden, dass die dann nach außen gebogenen Kalotten-Nasen Kontakt zu einer Schulter oder einer Laufbahn des äußeren Laufrings aufnehmen.

Bevorzugte Weiterbildungen der Erfindung ergeben sich auch aus den abhängigen Ansprüchen. Weiterbildungen beziehen sich sowohl auf den Kugellager-Käfig als auch auf das Kugellager.

Weiterbildend kann so vorgesehen sein, dass ein Käfigteil in Axialrichtung eine zylindrische Außenfläche aufweist. Diese Ausgestaltung bzw. dieses Käfigdesign kann vorzugsweise in Rillenkugellagern eingesetzt werden, bei denen sich Kalotten-Nasen drehzahlbedingt durch im Kugellager auftretende Fliehkräfte nicht nach außen aufbiegen.

Weiterhin kann weiterbildend auch vorgesehen sein, dass zumindest ein Käfigteil zumindest teilweise aus Kunststoff, insbesondere aus Polyetheretherketon (PEEK), Polyetherketon (PEK), Polyphenylensulfid (PPS), Polyamidimid (PAI), Polyimid (PI) oder Phenolharz (PF), insbesondere Baumwollgewebe-verstärktes Phenolharz (PF), besteht bzw. hergestellt ist/wird.

Bei einer Weiterbildung kann auch vorgesehen sein, dass die zwei Käfigteile aus dem gleichen Material, beispielsweise einem verschleißfesten oder einem gleitmodifizierten Werkstoff, oder aus den gleichen Materialien bestehen.

Auch kann vorgesehen sein, dass die zwei Käfigteile zumindest teilweise oder im Gesamten aus unterschiedlichen Materialien bestehen. Bevorzugt kann hier beispielsweise vorgesehen sein, dass das erste Käfigteil aus einem verschleißfesten Werkstoff, das zweite Käfigteil aus einem gleitmodifizierten Werkstoff besteht.

Ferner kann weiterbildend auch vorgesehen sein, dass ein Abstand der jeweils zwei in Umfangsrichtung benachbarten Stege in Umfangrichtung an einem Außenumfang des Käfigteils größer ist als ein Abstand der zwei Stege an einem Innenumfang des Käfigteils.

Diese unterschiedliche Abstandsbemessung am Innen- bzw. Außenumfang führt - beim montierten Kugellager-Käfig - insbesondere dann dazu, dass die (beim montierten Kugellager-Käfig) ausgebildeten Kugeltaschen jeweils unterschiedliche Kugeltaschenlängen (in der Umfangsrichtung) am Außenumfang bzw. Innenumfang des Kugellager-Käfigs aufweisen (Kugeltasche mit "Trichterform") .

Ein solches Käfigdesign - mit unterschiedlicher Kugeltaschenlänge am Außenumfang bzw. Innenumfang des Kugellager-Käfigs - (und dessen Herstellung) beschreibt die DE 10 2014 008 763 B4 (Gebrüder Reinfurt GmbH & Co.KG), 17.12.2015 (Offenlegungstag), Absätze [0018] ff. - mit dortigen FIGen 5 bis 7 und 10 bzw. FIGen 15 bis 17 und 20 insbesondere für einen einteiligen Innenring- bzw. Außenring-geführten Schnappkäfig, dessen diesbezüglicher Inhalt so Bestandteil vorliegender Ausführungen wird (in der DE 10 2014 008 763 B4 beschrieben mit "die Länge der Kugeltasche am Außenumfang des Kugellager-Käfigs größer als die Länge der Kugeltasche am Innenumfang des Kugellager-Käfigs ist." (vgl. [0028] der DE 10 2014 008 763 B4).

Vorzugsweise kann der Kugellager-Käfig durch spanende Formgebung, durch additive Fertigung, insbesondere durch 3-D-Druck, oder durch Spritzgießen hergestellt werden bzw. hergestellt sein.

Vorzugsweise kann auch vorgesehen sein, dass der Kugellager-Käfig in einem einreihigen Radial-Rillenkugellager eingesetzt bzw. verwendet wird.

Auch kann vorzugsweise vorgesehen sein, dass der Kugellager-Käfig für/bei Hochgeschwindigkeitsanwendungen angewandt bzw. eingesetzt wird, wie beispielsweise in einer Dentaltechnik, beispielsweise bei einer Dentalturbine, mit einem Drehzahlkennwert im Bereich von etwa n × dm ≥ 1000000 mm/min, wobei n einer Drehzahl des inneren Laufrings entspricht und dm einem mittleren Lagerdurchmesser entspricht. Der mittlere Lagerdurchmesser dm wird als ein Durchschnittswert zwischen einem Außendurchmesser und einem Bohrungsdurchmesser des Kugellagers berechnet.

Bei einer Weiterbildung kann vorgesehen sein, dass die Kugeln des Kugellagers (mit dem Kugellager-Käfig) den vorgebbaren Kugeldurchmesser von kleiner als 5 mm aufweisen.

Vorzugsweise kann das Kugellager (und/oder der Kugellager-Käfig) in einem Dentalgerät, insbesondere in einer Dentalturbine, eingesetzt werden bzw. eingesetzt sein.

Vorzugsweise erfolgt eine Montage des - den Kugellager-Käfig aufweisenden - Kugellagers nach folgenden Schritten wie folgt, dass:
- die Kugeln aneinander anliegend in den äußeren Laufring eingebracht werden,
- der innere Laufring zunächst aus einer exzentrischen Position in den äußeren Laufring eingefügt und in eine in etwa konzentrische Position in dem äußeren Laufring gebracht wird,
- die Kugeln so verteilt werden, dass sie in der Umfangsrichtung zueinander in etwa gleiche Abstände haben,
- die zwei Käfigteile nacheinander von beiden Seiten her zwischen dem inneren und dem äußeren Laufring eingeführt werden, wobei sie gegeneinander in den Kugelsatz einschnappen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen im Rahmen der beiliegenden Ansprüche zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung von einem oder mehreren Ausführungsbeispielen, das bzw. die im Zusammenhang mit den Figuren näher erläutert wird bzw. werden.

Die Erfindung ist jedoch nicht auf die in dem bzw. den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung im Rahmen der beiliegenden Ansprüche eingebracht werden.

Gleiche Bauteile, Komponenten u. ä. sind durch gleiche Bezugszeichen in den Figuren gekennzeichnet. Strichpunktierte Linien verdeutlichen Schnitte; durchgezogene Linien (Volllinien) weisen auf Kanten hin.

Es zeigen:
- FIG 1: die eine Käfighälfte eines zweiteiligen Schnappkäfigs mit zwei identischen Käfighälften gemäß einer ersten nicht erfindungsgemäßen Ausführung (perspektivisch),

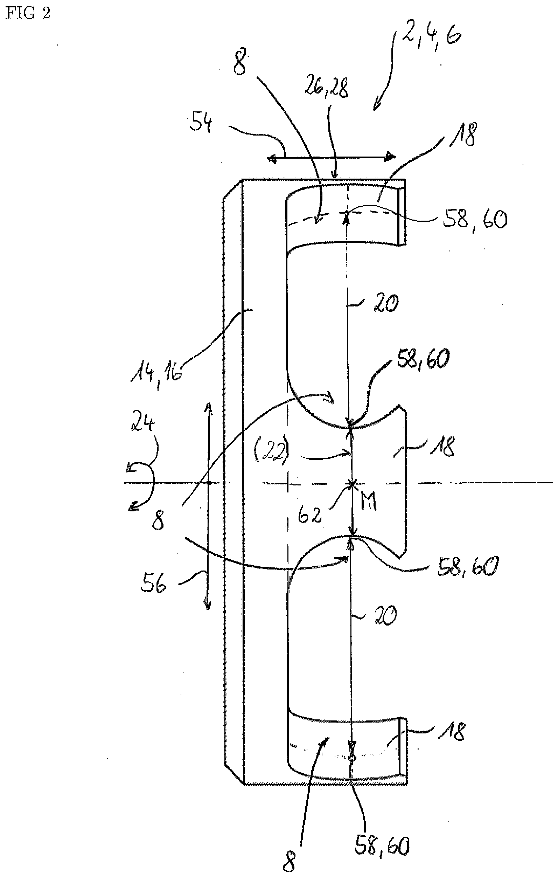

- FIG 2: die eine Käfighälfte des zweiteiligen Schnappkäfigs mit den zwei identischen Käfighälften gemäß der ersten Ausführung (Seitenansicht),

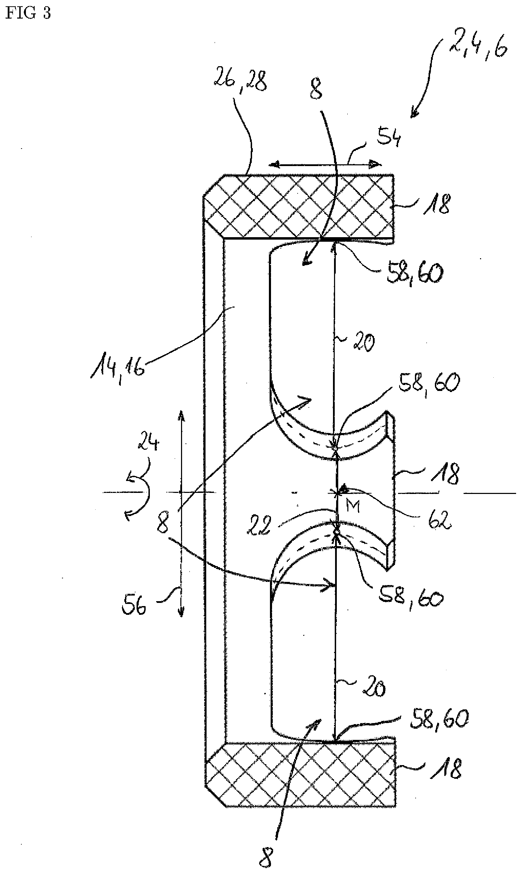

- FIG 3: die eine Käfighälfte des zweiteiligen Schnappkäfigs mit den zwei identischen Käfighälften gemäß der ersten Ausführung (Schnitt durch die Seitenansicht),
- FIG 4: die eine Käfighälfte des zweiteiligen Schnappkäfigs mit den zwei identischen Käfighälften gemäß der ersten Ausführung (Schnitt durch die Vorderansicht),
- FIG 5: die eine Käfighälfte des zweiteiligen Schnappkäfigs mit zwei identischen Käfighälften gemäß einer alternativen ersten Ausführung (Schnitt durch die Vorderansicht, "Trichterform"),

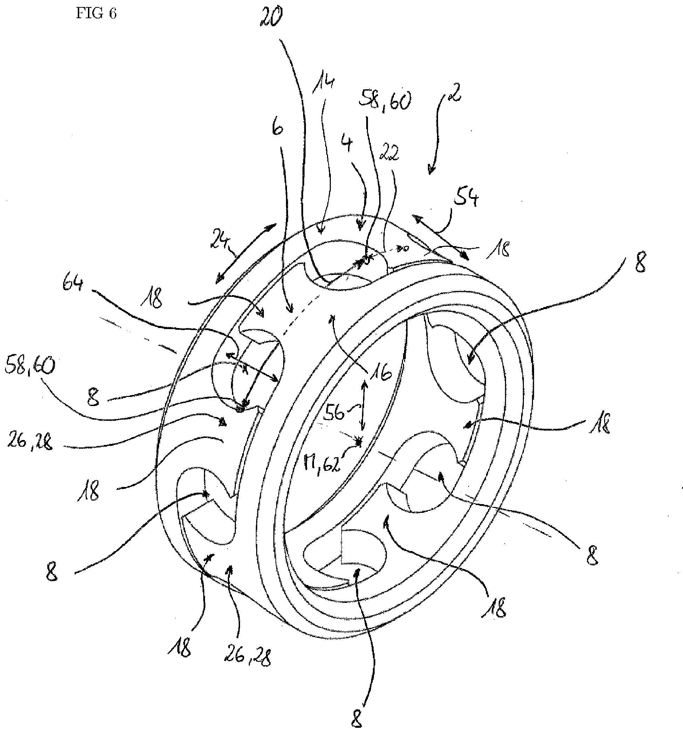

- FIG 6: beide Käfighälften des zweiteiligen Schnappkäfigs mit den zwei identischen Käfighälften gemäß der ersten Ausführung (perspektivisch),
- FIG 7: beide Käfighälften des zweiteiligen Schnappkäfigs mit den zwei identischen Käfighälften gemäß der ersten Ausführung mit Innenring und Kugeln (perspektivisch),
- FIG 8: Radial-Rillenkugellager mit einem Innenring-geführten zweiteiligen Schnappkäfig mit den zwei identischen Käfighälften gemäß der ersten Ausführung (Schnitt durch die Seitenansicht),

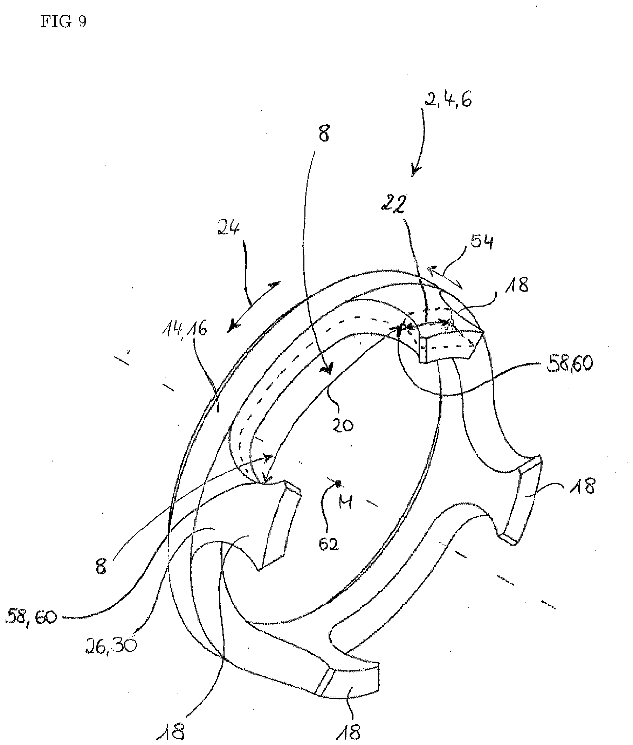

- FIG 9: die eine Käfighälfte eines zweiteiligen Schnappkäfigs mit zwei identischen Käfighälften gemäß einer zweiten Ausführung (perspektivisch),

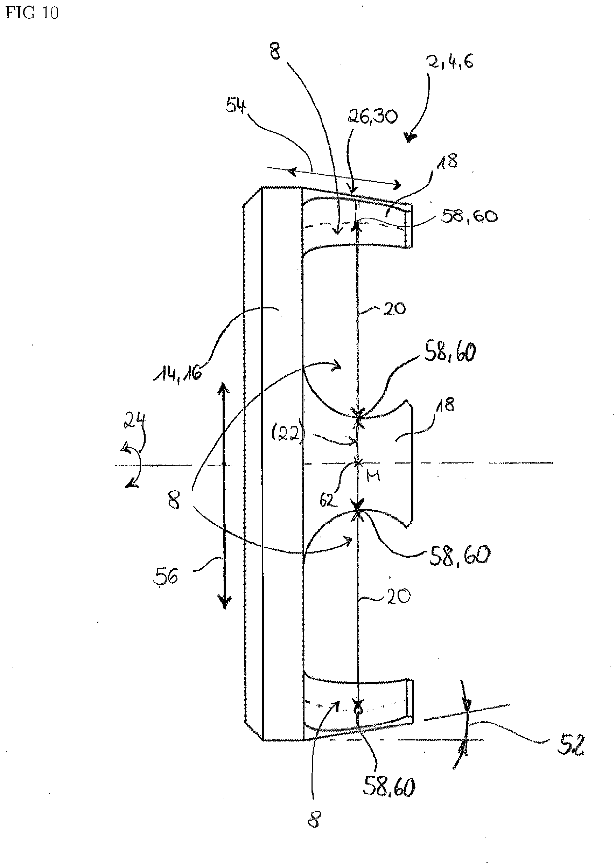

- FIG 10: die eine Käfighälfte des zweiteiligen Schnappkäfigs mit den zwei identischen Käfighälften gemäß der zweiten Ausführung (Seitenansicht),

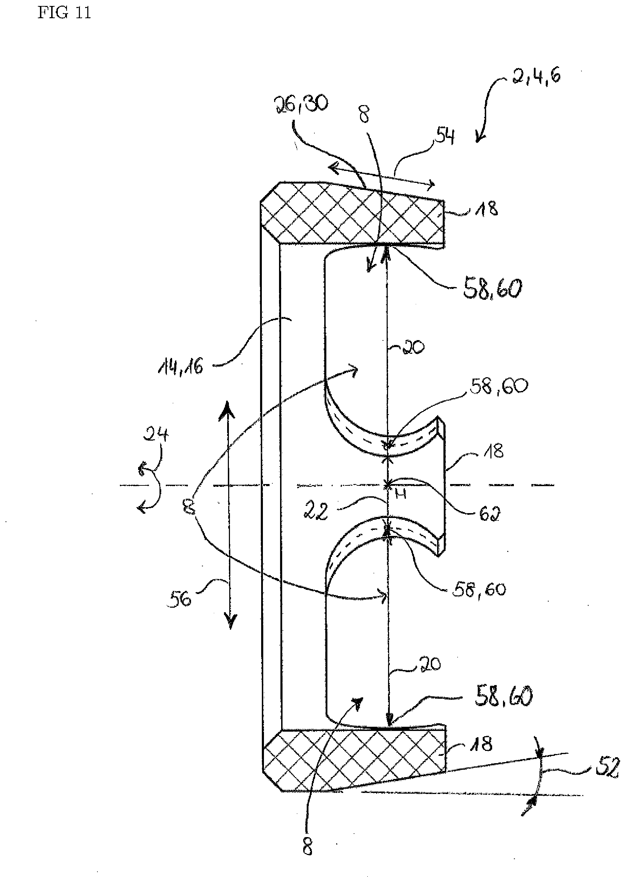

- FIG 11: die eine Käfighälfte des zweiteiligen Schnappkäfigs mit den zwei identischen Käfighälften gemäß der zweiten Ausführung (Schnitt durch die Seitenansicht),
- FIG 12: die eine Käfighälfte des zweiteiligen Schnappkäfigs mit den zwei identischen Käfighälften gemäß der zweiten Ausführung (Schnitt durch die Vorderansicht),
- FIG 13: die eine Käfighälfte des zweiteiligen Schnappkäfigs mit zwei identischen Käfighälften gemäß einer alternativen zweiten Ausführung (Schnitt durch die Vorderansicht, "Trichterform"),

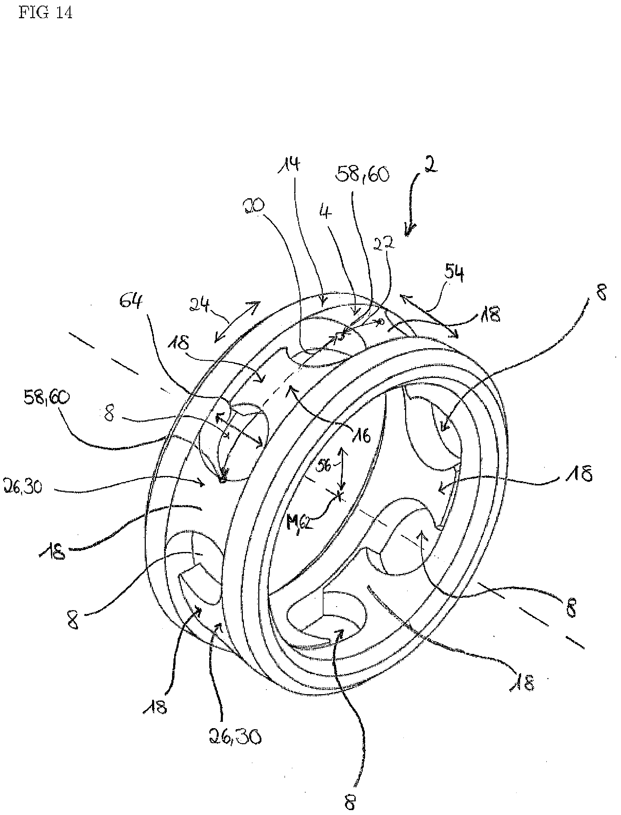

- FIG 14: beide Käfighälften des zweiteiligen Schnappkäfigs mit den zwei identischen Käfighälften gemäß der zweiten Ausführung (perspektivisch),
- FIG 15: beide Käfighälften des zweiteiligen Schnappkäfigs mit den zwei identischen Käfighälften gemäß der zweiten Ausführung mit Innenring und Kugeln (perspektivisch),
- FIG 16: Radial-Rillenkugellager mit einem Innenring-geführten zweiteiligen Schnappkäfig mit den zwei identischen Käfighälften gemäß der zweiten Ausführung (Schnitt durch die Seitenansicht).

FIGen 1 bis 8 zeigen ein Ausführungsbeispiel, das nicht Teil der Erfindung ist. FIGen 9 bis 16 zeigen ein Ausführungbeispiel, das Teil der Erfindung ist.

### Ausführungsbeispiele:

### Zweiteiliger Kugellager-Käfig bzw. Schnappkäfig 2 (FIGen 1 bis 16)

FIGen 1 bis 8 zeigen (in verschiedenen Ansichten, perspektivisch, in Seitenansicht und Schnittdarstellungen, und auch eingebaut in ein einreihiges Radial-Rillenkugellager 40) eine erste nicht erfindungsgemäße

Ausführung eines zweiteiligen Kugellager-Käfigs bzw. zweiteiligen Schnappkäfigs 2 ("zweiteiliger Kugellager-Käfig bzw. Schnappkäfig 2 mit zylindrischer Außenfläche"); FIGen 9 bis 16 zeigen (ebenfalls in den entsprechenden, verschiedenen Ansichten, perspektivisch, in Seitenansicht und Schnittdarstellungen, und wiederum auch eingebaut in ein einreihiges Radial-Rillenkugellager 40) eine zweite Ausführung des zweiteiligen Kugellager-Käfigs bzw. zweiteiligen Schnappkäfigs 2 ("zweiteiliger Kugellager-Käfig bzw. Schnappkäfig 2 mit konischer Außenfläche").

Diese zweiteiligen Kugellager-Käfige bzw. zweiteiligen Schnappkäfige 2 bilden - mit ihren zwei (annähernd) identischen (Käfig-)Teilen 4, 6, d. h., zwei identischen Käfighälften 4, 6, - Kugeltaschen 8 aus, welche der Aufnahme von Kugeln 10 eines Kugellagers 40 bzw. - in diesem Fall - eines einreihigen Radial-Rillenkugellagers 40 dienen (vgl. FIGen 7 und 8 bzw. 15 und 16).

Dabei nimmt jede ausgebildete Kugeltasche 8 des zweiteiligen Kugellager-Käfigs bzw. Schnappkäfigs 2 eine Kugel 10 auf. Alle in den ausgebildeten Kugeltaschen 8 des zweiteiligen Kugellager-Käfigs bzw. Schnappkäfigs 2 aufgenommenen Kugeln 10 werden in ihrer Gesamtheit auch als Kugelsatz 50 (des Kugellagers bzw. einreihigen Radial-Rillenkugellagers 40) bezeichnet.

Die Kugeln 10 des verwendeten Kugelsatzes 50 weisen einen vorgebbaren Kugeldurchmesser 12 auf, beispielsweise 1 mm, wodurch dann - in diesem Fall - das entsprechende Kugellager 40 (mit diesen Kugeln 10 bzw. Kugelsatz 50) in den Bereich einer Miniaturanwendung, beispielsweise einer Dentalanwendung, wie bei einer Dentalturbine, fällt.

### - Zweiteiliger Kugellager-Käfig bzw. Schnappkäfig 2 mit zylindrischer Außenfläche 26, 28 (FIGen 1 bis 8)

FIGen 1 bis 5 zeigen jeweils eine Käfighälfte 4, 6 des zweiteiligen Kugellager-Käfigs 2 bzw. zweiteiligen Schnappkäfigs 2 (kurz im Folgenden nur Schnappkäfig 2) nach der erster Ausführung ("zylindrische Außenfläche 26, 28"). Beide Käfighälften 4, 6 des Schnappkäfigs 2 sind identisch zueinander ausgebildet (vgl. FIGen 6 und 7).

Wie die FIGen 1 bis 5 jeweils - exemplarisch - für die eine der beiden (identischen) Käfighälften 4, 6 zeigen, weist jede Käfighälfte 4, 6 einen ringförmigen Käfigrücken 14, 16 sowie daran - in einer Umfangsrichtung 24 des Schnappkäfigs 2 bzw. der Käfighälfte 4, 6 in etwa gleichmäßig verteilt - axial 54 (bzw. in Breitenrichtung 54 des Schnappkäfigs 2 bzw. der Käfighälfte 4, 6) auskragend angeordnete Stege 18 auf.

Die Stege 18, wie die FIGen 1 bis 3 sowie 6 bis 7 zeigen, welche in ihrer Axial- bzw. Breitenrichtung 54 einen bikonkaven Verlauf/eine bikonkave Form aufweisen, deren Wölbungen/Krümmungen (nach "innen") jeweils dem Kugelquerschnitt ("Kreis/- bogen") der Kugeln 10 angepasst sind, bilden so die Kugeltaschen 8 (mit) aus, indem sie eine Kugeltasche 8 in der Umfangsrichtung 24 des Schnappkäfigs 2 bzw. der Käfighälfte 4, 6 begrenzen.

Die Breiten 64 der ausgebildeten Kugeltaschen 8 (in der Axialrichtung 54) sind jeweils geringfügig größer als der Kugeldurchmesser 12 der Kugeln 10.

Wie die FIGen 1 bis 7 auch zeigen, weist das Käfigteil 4, 6 in der Axialrichtung 54 eine zylindrische Außenfläche 26, 28 auf. Diese erste Ausführung bzw. dieses Käfigdesign kann vorzugsweise in solchen einreihigen Radial-Rillenkugellagern 40 eingesetzt werden, bei denen sich Kalotten-Nasen Drehzahl-bedingt durch in den einreihigen Radial-Rillenkugellagern 40 auftretende Fliehkräfte nicht nach außen aufbiegen.

Abweichend von bzw. anders als bei einem bisher üblichen Schnappkäfig bzw. dortigem, Kugeltaschen ausbildende Stege aufweisenden Käfigteil entspricht hier, d. h., bei vorliegendem Schnappkäfig 2 bzw. bei vorliegender Käfighälfte 4, 6 , wie insbesondere die FIGen 1 bis 5 verdeutlichen, - der Abstand 20 - in der Umfangsrichtung 24 des Schnappkäfigs 2 bzw. der Käfighälfte 4, 6 - zwischen jeweils zwei der in der Umfangsrichtung 24 benachbarten Stege 18 der Summe aus dem zweifachen Kugeldurchmesser 12 der für die Kugeltaschen 8 vorgesehenen Kugeln 10 und einer Breite 22 des bzw. eines solchen Steges 18 in der Umfangsrichtung 24. Etwaige Toleranzen und/oder ein Kugeltaschenspiel können (bei der Summe) dazukommen bzw. mit berücksichtigt werden

Dadurch, d. h., bei einem solchen Abstand 20 bei/zwischen den Stegen 18 der bzw. bei der Käfighälfte 4, 6, können - in der Umfangsrichtung 24 des Schnappkäfigs 2 bzw. der Käfighälfte 4, 6 - zwischen jeweils den zwei in der Umfangsrichtung 24 benachbarten Stegen 18 der Käfighälfte 4, 6 (anders als sonst üblich) zwei Kugeltaschen 8 ausgebildet und so zwei Kugeln 10 aufgenommen werden.

Dieser "Abstand" 20 zwischen den zwei in der Umfangsrichtung 24 benachbarten Stegen 18 bemisst sich, d. h., kann gemessen werden, wie insbesondere die FIGen 1 bis 5 verdeutlichen, an einer axialen 54, d. h., die Erstreckung der/einer Kugeltasche 8 in der Axialrichtung 54 (auch Breitenrichtung 54) des Schnappkäfigs 2 bzw. der Käfighälfte 4, 6, Mitte 58 der/einer Kugeltasche 8 sowie an einer mittleren radialen 56, d. h., die Erstreckung eines Steges 18 radial 56 hin zu bzw. weg von einem Mittelpunkt M 62 des Schnappkäfigs 2, Höhe 60 eines Steges 18 bzw. der Stege 18 - und ist die Länge 20 des entsprechenden, sich zwischen den zwei benachbarten Stegen 18 diesbezüglich ausbildenden Kreisbogens (Kreisbogenlänge 20) (vgl. insbesondere die FIGen 1 bis 5).

Die "Breite" 22 des/eines Steges 18 meint dessen Erstreckung 22, anschaulich gesehen eine (Kreisbogen-)Länge 22, in der Umfangsrichtung 24 des Schnappkäfigs 2 bzw. der Käfighälfte 4, 6 - hier dann an der axialen Mitte 58 der/einer Kugeltasche 8 sowie an der mittleren radialen Höhe 60 des/eines Steges 18 bzw. der Stege 18 (vgl. insbesondere FIGen 1 bis 5).

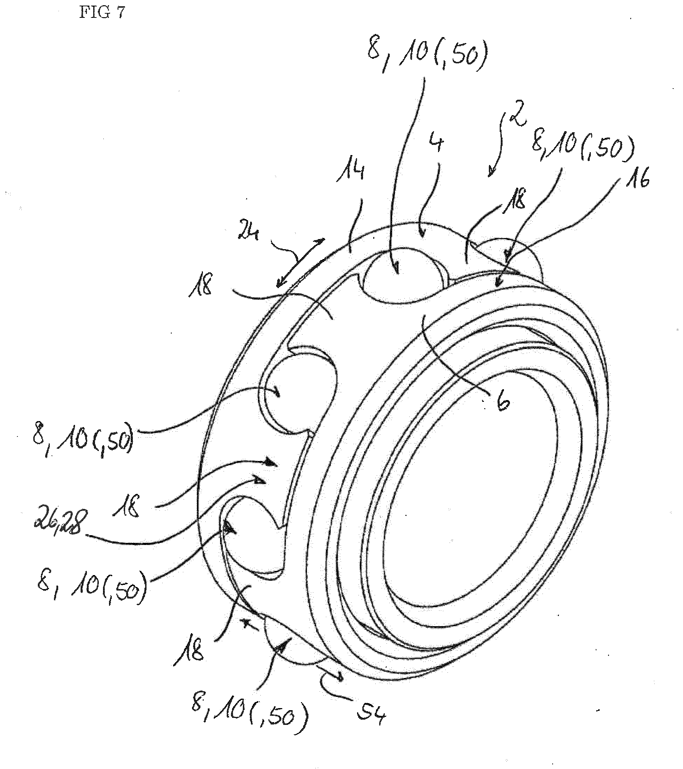

Anschaulich und vereinfacht ausgedrückt, jeweils zwei in der Umfangsrichtung 24 benachbarte Stege 18 der Käfighälfte 4, 6 sind - in der Umfangsrichtung 24 - (nach dem vorgesehenen Abstand 20) derart (weit) beabstandet bzw. voneinander entfernt (an dem Käfigrücken 14, 16 der jeweiligen Käfighälfte 4, 6 angeordnet), dass sich zwischen ihnen (bei montiertem Schnappkäfig 2 - vgl. FIGen 6 und 7) zwei Kugeltaschen 8 (zur Aufnahme von zwei Kugeln 10) ausbilden können, nämlich dann bzw. nämlich dadurch, dass - wenn die zwei Käfighälften 4, 6 bei bzw. nach einer Montage des Schnappkäfigs 2 gegeneinander in den Kugelsatz 50 einschnappen (vgl. FIG 7) - ein Steg 18 des einen Käfigteils 4, 6 (in etwa mittig) zwischen den zwei in der Umfangsrichtung 24 benachbarten Stegen 18 des anderen Käfigteils 4, 6 axial "eintaucht" bzw. zu liegen kommt.

Anders ausgedrückt, die Stege 18 des einen Käfigteils 4, 6 und die Stege 18 des anderen Käfigteils 4, 6 begrenzen, wie die FIGen 6 und 7 verdeutlichen, - im montierten Zustand des Schnappkäfigs 2 - wechselseitig bzw. sich jeweils abwechselnd die einzelnen Kugeltaschen 8 bei dem Schnappkäfig 2.

Der Schnappkäfig 2 stellt so die zwei identischen Käfighälften 4, 6 zur Verfügung, dessen beide Käfighälften 4, 6 - bei einer Montage des Schnappkäfigs 2 - gegeneinander in den Kugelsatz 50 des Kugellagers 40 einschnappen können ("(schnapp-)verriegeln/ "Schnappverriegelung"), wobei sich so die - geradzahligen - Kugeltaschen 8 des Schnappkäfigs 2 - nach der Montage des Schnappkäfigs 2 bzw. der Käfighälften 4, 6 im Kugellager 40 - ausbilden.

Die FIGen 4 und 5 zeigen zwei mögliche alternative (Unter-) Ausgestaltungsformen bei der ersten Ausführung des Schnappkäfigs 2, d. h., bei dem Schnappkäfig 2 mit der zylindrischen Außenfläche 26, 28.

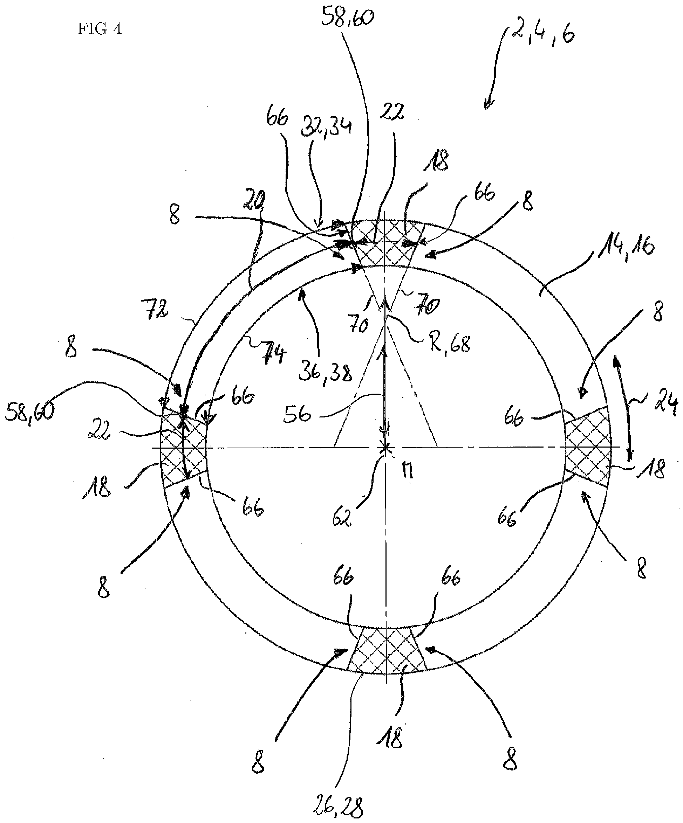

Wie FIG 4 - exemplarisch für die eine Käfighälfte 4,6 der zwei identischen Käfighälften 4, 6 des Schnappkäfigs 2 - zeigt, ist bei dieser ersten (Unter-)Ausgestaltungsform vorgesehen, dass ein Abstand 72 der jeweils zwei in Umfangsrichtung benachbarten Stege 18 in der Umfangrichtung 24 an einem Außenumfang 32, 34 der Käfighälfte 4, 6 in etwa genauso groß ist wie ein Abstand 74 der zwei Stege 18 an einem Innenumfang 36, 38 der Käfighälfte 4, 6, d.h, auch der Abstand 20 in etwa der Summe aus dem zweifachen Kugeldurchmesser 12 der für die Kugeltaschen 8 vorgesehenen Kugeln 10 und einer Breite 22 des bzw. eines solchen Steges 18 in der Umfangsrichtung 24.

Wie FIG 4 - diese Bemessung - (im Schnitt) verdeutlicht (FIG 4 ist ein (Quer-)Schnitt des Schnappkäfigs 2 parallel zum Radius R 68 des Schnappkäfigs 2 in der axialen Mitte 58 der Kugeltasche 8) erstrecken sich die Wandungen 66 des/eines Stegs 18, die die Kugeltaschen 8 in der Umfangsrichtung 24 begrenzen, in Richtung zu dem Mittelpunkt M 62 des Schnappkäfigs 2 in konvergierender Weise derart, dass sich deren (gedachte) Verlängerungen 70 in der radialer Richtung des Schnappkäfigs 2 "vor" dessen Mittelpunkt M 62 kreuzen.

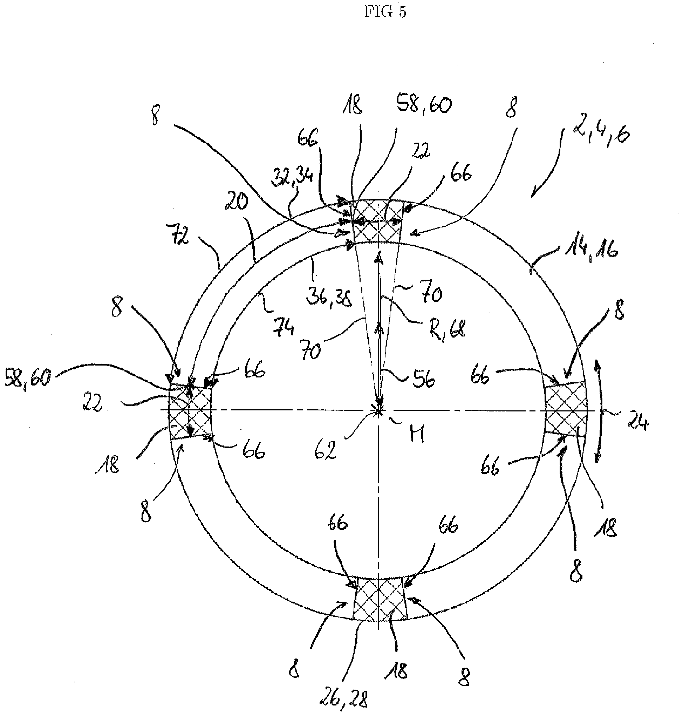

Demgegenüber ist bei der zweiten alternativen (Unter-)Ausgestaltungsform vorgesehen, wie FIG 5 - ebenfalls wieder exemplarisch für die eine Käfighälfte 4,6 der zwei identischen Käfighälften 4, 6 des Schnappkäfigs 2 - zeigt, dass der Abstand 72 der jeweils zwei in der Umfangsrichtung 24 benachbarten Stege 18 in der Umfangrichtung 24 an dem Außenumfang 32, 34 der Käfighälfte 4, 6 - in diesem Fall - größer ist als der Abstand 74 der zwei Stege 18 an dem Innenumfang 36, 38 der Käfighälfte 4, 6 (ungeachtet und unschädlich des vorgesehenen Abstands 20 in etwa der Summe aus dem zweifachen Kugeldurchmesser 12 der für die Kugeltaschen 8 vorgesehenen Kugeln 10 und der Breite 22 des bzw. eines solchen Steges 18 in der Umfangsrichtung 24 - an der axialen Mitte 58 der/einer Kugeltasche 8 sowie an der mittleren radialen Höhe 60 eines Steges 18 bzw. der Stege 18).

Wie FIG 5 - diese Bemessung - (ebenfalls im Schnitt) verdeutlicht (FIG 5 ist ebenfalls ein (Quer-)Schnitt des Schnappkäfigs 2 parallel zum Radius R 68 des Schnappkäfigs 2 in der axialen Mitte 58 der Kugeltasche 8) erstrecken sich die Wandungen 66 des/eines Stegs 18, die die Kugeltaschen 8 in der Umfangsrichtung 24 begrenzen, in Richtung zu dem Mittelpunkt M 62 des Schnappkäfigs 2 in konvergierender Weise derart, dass sich deren (gedachte) Verlängerungen 70 in der radialer Richtung des Schnappkäfigs 2 in dessen Mittelpunkt M 62 kreuzen.

Diese unterschiedliche Abstandsbemessung (bei der zweiten alternativen (Unter-)Ausgestaltungsform) am Innen- 32, 34 bzw. Außenumfang 36, 38 führt - beim montierten Schnappkäfig 2 - insbesondere dann dazu, dass die (beim montierten Schnappkäfig 2) ausgebildeten Kugeltaschen 8 jeweils unterschiedliche Kugeltaschenlängen (in der Umfangsrichtung 24) am Außenumfang 32, 34 bzw. Innenumfang 36, 38 des Schnappkäfigs 2 aufweisen (Kugeltasche 8 mit "Trichterform").

Der Schnappkäfig 2 ist aus einem Hochleistungskunststoff hergestellt, wie beispielsweise Polyetheretherketon (PEEK), Polyetherketon (PEK), Polyphenylensulfid (PPS), Polyamidimid (PAI) oder Polyimid (PI).

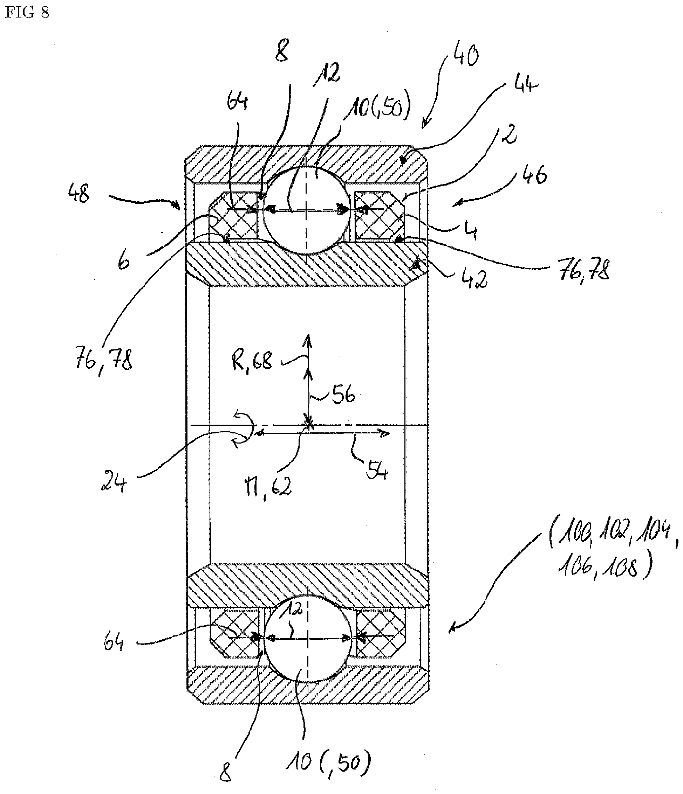

FIG 8 zeigt das einreihige Radial-Rillenkugellager 40 mit dem die Kugeln 10 in Position haltenden eingebauten Schnappkäfig 2 - zwischen einem inneren Laufring 42 sowie einem äußeren Laufring 44. Der Schnappkäfig 2 ist als Innenring-geführter Kugellager-Käfig 2 ausgeführt, d. h., der Innenumfang 36, 38 des Schnappkäfigs 2 bzw. die Innenumfänge 36, 38 der beiden Käfighälften 4, 6 gleitet auf einem Außenumfang 76 des inneren Laufringes 42.

Durch die Tatsache, dass dabei jede Käfighälfte 4, 6 des Schnappkäfigs 2 separat auf einer Innenringschulter 78 des inneren Laufrings 42 bei dem einreihigen Radial-Rillenkugellager 40 geführt werden kann, können auftretende Schwingungen in vorteilhafter Weise gedämpft werden.

Der äußere Laufring 44 und der innere Laufring 42 des einreihigen Radial-Rillenkugellagers 40 sind aus Chromstahl gefertigt, wie beispielsweise aus 100Cr6 (Werkstoff-Nr. 1.3505), ein Stahl mit einem Gehalt von ca. 1 % Kohlenstoff und 1,5 % Chrom.

Bei der Montage 100 des einreihigen Radial-Rillenkugellagers 40 werden zunächst die Kugeln 10 aneinander anliegend in den äußeren Laufring 44 eingebracht 102.

Anschließend wird der innere Laufring 42 zunächst aus einer exzentrischen Position in den äußeren Laufring 44 eingefügt und dann in eine in etwa konzentrische Position in dem äußeren Laufring 44 gebracht 104.

Weiter werden dann die Kugeln 10 so verteilt, dass sie zueinander in der Umfangrichtung 24 in etwa gleiche Abstände haben 106.

Nachfolgend diesem werden die zwei Käfighälften 4, 6 nacheinander von beiden Seiten 46, 48 her zwischen dem inneren und dem äußeren Laufring 42, 44 eingeführt, wobei sie gegeneinander in den Kugelsatz 50 einschnappen 108.

### - Zweiteiliger Kugellager-Käfig bzw. Schnappkäfig 2 mit konischer Außenfläche 26, 30 (FIGen 9 bis 16)

FIGen 9 bis 13 zeigen jeweils eine Käfighälfte 4, 6 des zweiteiligen Kugellager-Käfigs 2 bzw. zweiteiligen Schnappkäfigs 2 (kurz im Folgenden wieder nur Schnappkäfig 2) nach der zweiten Ausführung ("konische Außenfläche 26, 30"). Beide Käfighälften 4, 6 des Schnappkäfigs 2 sind (übereinstimmend mit dem bzw. wie auch beim Schnappkäfig 2 nach der ersten Ausführung) identisch zueinander ausgebildet (vgl. FIGen 14 und 15).

Wie die FIGen 9 bis 13 jeweils - exemplarisch - für die eine der beiden (identischen) Käfighälften 4, 6 zeigen, weist (übereinstimmend mit dem bzw. wie auch beim Schnappkäfig 2 nach der ersten Ausführung) jede Käfighälfte 4, 6 einen ringförmigen Käfigrücken 14, 16 sowie daran - in einer Umfangsrichtung 24 des Schnappkäfigs 2 bzw. der Käfighälfte 4, 6 in etwa gleichmäßig verteilt - axial 54 (bzw. in Breitenrichtung 54 des Schnappkäfigs 2 bzw. der Käfighälfte 4, 6) auskragend angeordnete Stege 18 auf.

Die Stege 18, wie die FIGen 9 bis 11 sowie 14 bis 15 zeigen, welche (übereinstimmend mit dem bzw. wie auch beim Schnappkäfig 2 nach der ersten Ausführung) in ihrer Axial- bzw. Breitenrichtung 54 einen bikonkaven Verlauf/eine bikonkave Form aufweisen, deren Wölbungen/Krümmungen (nach "innen") jeweils dem Kugelquerschnitt ("Kreis/-bogen") der Kugeln 10 angepasst sind, bilden so (übereinstimmend mit dem bzw. wie auch beim Schnappkäfig 2 nach der ersten Ausführung) die Kugeltaschen 8 (mit) aus, indem sie eine Kugeltasche 8 in der Umfangsrichtung 24 des Schnappkäfigs 2 bzw. der Käfighälfte 4, 6 begrenzen.

Die Breiten 64 der ausgebildeten Kugeltaschen 8 (in der Axialrichtung 54) sind (übereinstimmend mit dem bzw. wie auch beim Schnappkäfig 2 nach der ersten Ausführung) jeweils geringfügig größer als der Kugeldurchmesser 12 der Kugeln 10.

Wie die FIGen 9 bis 15 auch zeigen, weist (abweichend vom Schnappkäfig 2 nach der ersten Ausführung) das Käfigteil 4, 6 in der Axialrichtung 54 eine konische Außenfläche 26, 30 auf. Diese zweite Ausführung bzw. dieses Käfigdesign kann vorzugsweise in solchen einreihigen Radial-Rillenkugellagern 40 eingesetzt werden, bei denen sich Kalotten-Nasen Drehzahl-bedingt durch in den einreihigen Radial-Rillenkugellagern 40 auftretende Fliehkräfte nach außen aufbiegen, wodurch verhindert werden kann, dass die dann nach außen gebogenen Kalotten-Nasen Kontakt zu einer Schulter oder einer Laufbahn eines äußeren Laufrings des einreihigen Radial-Rillenkugellagers 40 aufnehmen.

Der Konuswinkel 52 dieser konischen Außenfläche 26, 30 bei dem Käfigteil 4, 6 des Schnappkäfigs 2 beträgt, wie die FIGen 9 bis 15, insbesondere die FIGen 10 und 11, auch verdeutlichen, in diesem Fall ca. 10°.

Abweichend von bzw. anders als bei einem bisher üblichen Schnappkäfig bzw. dortigem, Kugeltaschen ausbildende Stege aufweisenden Käfigteil entspricht auch hier, d. h., bei vorliegendem Schnappkäfig 2 bzw. bei vorliegender Käfighälfte 4, 6 , wie insbesondere die FIGen 9 bis 13 verdeutlichen, (übereinstimmend mit dem bzw. wie auch beim Schnappkäfig 2 nach der ersten Ausführung) - der Abstand 20 - in der Umfangsrichtung 24 des Schnappkäfigs 2 bzw. der Käfighälfte 4, 6 - zwischen jeweils zwei der in der Umfangsrichtung 24 benachbarten Stege 18 der Summe aus dem zweifachen Kugeldurchmesser 12 der für die Kugeltaschen 8 vorgesehenen Kugeln 10 und einer Breite 22 des bzw. eines solchen Steges 18 in der Umfangsrichtung 24. Etwaige Toleranzen und/oder ein Kugeltaschenspiel können (bei der Summe) dazukommen bzw. mit berücksichtigt werden

Dadurch, d. h., bei einem solchen Abstand 20 bei/zwischen den Stegen 18 der bzw. bei der Käfighälfte 4, 6, können - in der Umfangsrichtung 24 des Schnappkäfigs 2 bzw. der Käfighälfte 4, 6 - zwischen jeweils den zwei in der Umfangsrichtung 24 benachbarten Stegen 18 der Käfighälfte 4, 6 (anders als sonst üblich und übereinstimmend mit dem bzw. wie auch beim Schnappkäfig 2 nach der ersten Ausführung) zwei Kugeltaschen 8 ausgebildet und so zwei Kugeln 10 aufgenommen werden.

Dieser "Abstand" 20 zwischen den zwei in der Umfangsrichtung 24 benachbarten Stegen 18 bemisst sich (übereinstimmend mit dem bzw. wie auch beim Schnappkäfig 2 nach der ersten Ausführung), d. h., kann gemessen werden, wie insbesondere die FIGen 9 bis 13 verdeutlichen, an einer axialen 54, d. h., die Erstreckung der/einer Kugeltasche 8 in der Axialrichtung 54 (auch Breitenrichtung 54) des Schnappkäfigs 2 bzw. der Käfighälfte 4, 6, Mitte 58 der/einer Kugeltasche 8 sowie an einer mittleren radialen 56, d. h., die Erstreckung eines Steges 18 radial 56 hin zu bzw. weg von einem Mittelpunkt M 62 des Schnappkäfigs 2, Höhe 60 eines Steges 18 bzw. der Stege 18 - und ist die Länge 20 des entsprechenden, sich zwischen den zwei benachbarten Stegen 18 diesbezüglich ausbildenden Kreisbogens (Kreisbogenlänge 20) (vgl. insbesondere die FIGen 9 bis 13).

Die "Breite" 22 des/eines Steges 18 meint (übereinstimmend mit dem bzw. wie auch beim Schnappkäfig 2 nach der ersten Ausführung) dessen Erstreckung 22, anschaulich gesehen eine (Kreisbogen-)Länge 22, in der Umfangsrichtung 24 des Schnappkäfigs 2 bzw. der Käfighälfte 4, 6 - hier dann an der axialen Mitte 58 der/einer Kugeltasche 8 sowie an der mittleren radialen Höhe 60 des/eines Steges 18 bzw. der Stege 18 (vgl. insbesondere die FIGen 9 bis 13).

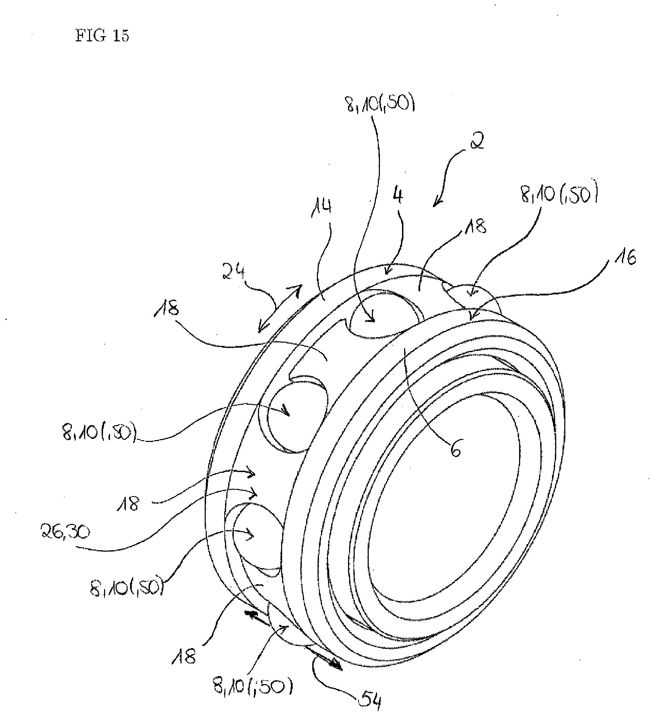

Anschaulich und vereinfacht ausgedrückt, jeweils zwei in der Umfangsrichtung 24 benachbarte Stege 18 der Käfighälfte 4, 6 sind - in der Umfangsrichtung 24 - (nach dem vorgesehenen Abstand 20) derart (weit) beabstandet bzw. voneinander entfernt (an dem Käfigrücken 14, 16 der jeweiligen Käfighälfte 4, 6 angeordnet), dass sich zwischen ihnen (bei montiertem Schnappkäfig 2 - vgl. FIGen 14 und 15) zwei Kugeltaschen 8 (zur Aufnahme von zwei Kugeln 10) ausbilden können, nämlich dann bzw. nämlich dadurch, dass - wenn die zwei Käfighälften 4, 6 bei bzw. nach einer Montage des Schnappkäfigs 2 gegeneinander in den Kugelsatz 50 einschnappen (vgl. FIG 15) - ein Steg 18 des einen Käfigteils 4, 6 (in etwa mittig) zwischen den zwei in der Umfangsrichtung 24 benachbarten Stegen 18 des anderen Käfigteils 4, 6 axial "eintaucht" bzw. zu liegen kommt.

Anders ausgedrückt, die Stege 18 des einen Käfigteils 4, 6 und die Stege 18 des anderen Käfigteils 4, 6 begrenzen (übereinstimmend mit dem bzw. wie auch beim Schnappkäfig 2 nach der ersten Ausführung), wie die FIGen 14 und 15 verdeutlichen, - im montierten Zustand des Schnappkäfigs 2 - wechselseitig bzw. sich jeweils abwechselnd die einzelnen Kugeltaschen 8 bei dem Schnappkäfig 2.

Der Schnappkäfig 2 stellt so (übereinstimmend mit dem bzw. wie auch beim Schnappkäfig 2 nach der ersten Ausführung) die zwei identischen Käfighälften 4, 6 zur Verfügung, dessen beide Käfighälften 4, 6 - bei einer Montage des Schnappkäfigs 2 - gegeneinander in den Kugelsatz 50 des Kugellagers 40 einschnappen können ("(schnapp-)verriegeln/ "Schnappverriegelung"), wobei sich so die - geradzahligen - Kugeltaschen 8 des Schnappkäfigs 2 - nach der Montage des Schnappkäfigs 2 bzw. der Käfighälften 4, 6 im Kugellager 40 - ausbilden.

Die FIGen 12 und 13 zeigen (übereinstimmend mit dem bzw. wie auch beim Schnappkäfig 2 nach der ersten Ausführung) zwei mögliche alternative (Unter-) Ausgestaltungsformen bei der zweiten Ausführung des Schnappkäfigs 2, d. h., bei dem Schnappkäfig 2 mit der konischen Außenfläche 26, 30.

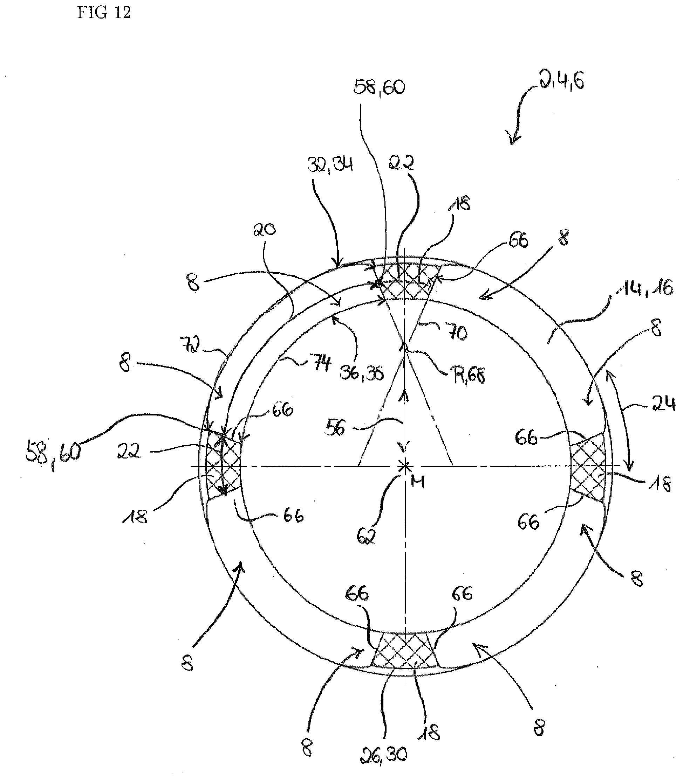

Wie FIG 12 - exemplarisch für die eine Käfighälfte 4,6 der zwei identischen Käfighälften 4, 6 des Schnappkäfigs 2 - zeigt, ist (übereinstimmend mit dem bzw. wie auch beim Schnappkäfig 2 nach der ersten Ausführung) bei dieser ersten (Unter-)Ausgestaltungsform vorgesehen, dass ein Abstand 72 der jeweils zwei in Umfangsrichtung benachbarten Stege 18 in der Umfangrichtung 24 an einem Außenumfang 32, 34 der Käfighälfte 4, 6 in etwa genauso groß ist wie ein Abstand 74 der zwei Stege 18 an einem Innenumfang 36, 38 der Käfighälfte 4, 6, d.h, auch der Abstand 20 in etwa der Summe aus dem zweifachen Kugeldurchmesser 12 der für die Kugeltaschen 8 vorgesehenen Kugeln 10 und einer Breite 22 des bzw. eines solchen Steges 18 in der Umfangsrichtung 24.

Wie FIG 12 - diese Bemessung - (im Schnitt) verdeutlicht (FIG 12 ist ein (Quer-)Schnitt des Schnappkäfigs 2 parallel zum Radius R 68 des Schnappkäfigs 2 in der axialen Mitte 58 der Kugeltasche 8) erstrecken sich die Wandungen 66 des/eines Stegs 18, die die Kugeltaschen 8 in der Umfangsrichtung 24 begrenzen, in Richtung zu dem Mittelpunkt M 62 des Schnappkäfigs 2 in konvergierender Weise derart, dass sich deren (gedachte) Verlängerungen 70 in der radialer Richtung des Schnappkäfigs 2 "vor" dessen Mittelpunkt M 62 kreuzen.

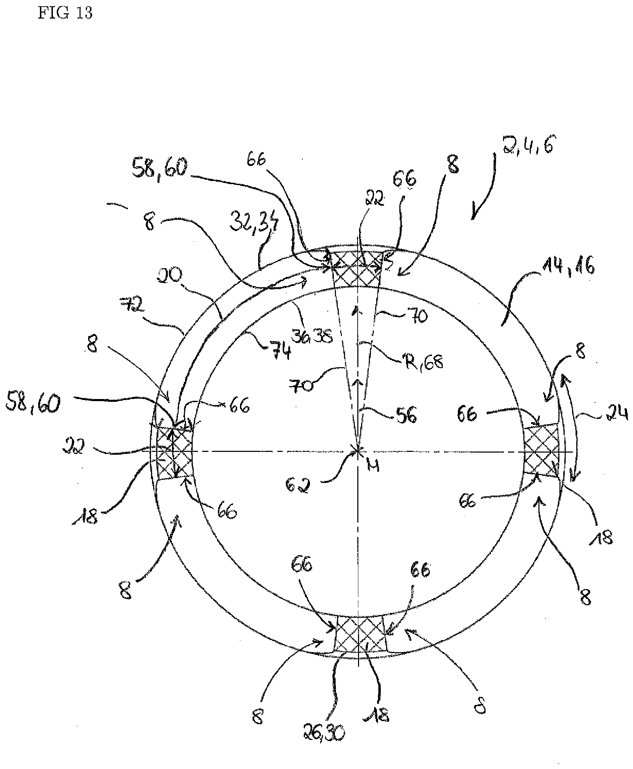

Demgegenüber ist bei der zweiten alternativen (Unter-)Ausgestaltungsform vorgesehen, wie FIG 13 - ebenfalls wieder exemplarisch für die eine Käfighälfte 4,6 der zwei identischen Käfighälften 4, 6 des Schnappkäfigs 2 - zeigt, dass (übereinstimmend mit dem bzw. wie auch beim Schnappkäfig 2 nach der ersten Ausführung) der Abstand 72 der jeweils zwei in der Umfangsrichtung 24 benachbarten Stege 18 in der Umfangrichtung 24 an dem Außenumfang 32, 34 der Käfighälfte 4, 6 - in diesem Fall - größer ist als der Abstand 74 der zwei Stege 18 an dem Innenumfang 36, 38 der Käfighälfte 4, 6 (ungeachtet und unschädlich des vorgesehenen Abstands 20 in etwa der Summe aus dem zweifachen Kugeldurchmesser 12 der für die Kugeltaschen 8 vorgesehenen Kugeln 10 und der Breite 22 des bzw. eines solchen Steges 18 in der Umfangsrichtung 24 - an der axialen Mitte 58 der/einer Kugeltasche 8 sowie an der mittleren radialen Höhe 60 eines Steges 18 bzw. der Stege 18).

Wie FIG 13 - diese Bemessung - (ebenfalls im Schnitt) verdeutlicht (FIG 13 ist ebenfalls ein (Quer-)Schnitt des Schnappkäfigs 2 parallel zum Radius R 68 des Schnappkäfigs 2 in der axialen Mitte 58 der Kugeltasche 8) erstrecken sich die Wandungen 66 des/eines Stegs 18, die die Kugeltaschen 8 in der Umfangsrichtung 24 begrenzen, in Richtung zu dem Mittelpunkt M 62 des Schnappkäfigs 2 in konvergierender Weise derart, dass sich deren (gedachte) Verlängerungen 70 in der radialer Richtung des Schnappkäfigs 2 in dessen Mittelpunkt M 62 kreuzen.

Diese unterschiedliche Abstandsbemessung (bei der zweiten alternativen (Unter-)Ausgestaltungsform) am Außen- 32, 34 bzw. Innenumfang 36, 38 führt - beim montierten Schnappkäfig 2 - insbesondere dann dazu, dass (übereinstimmend mit dem bzw. wie auch beim Schnappkäfig 2 nach der ersten Ausführung) die (beim montierten Schnappkäfig 2) ausgebildeten Kugeltaschen 8 jeweils unterschiedliche Kugeltaschenlängen (in der Umfangsrichtung 24) am Außenumfang 32, 34 bzw. Innenumfang 36, 38 des Schnappkäfigs 2 aufweisen (Kugeltasche 8 mit "Trichterform").

Der Schnappkäfig 2 ist (übereinstimmend mit dem bzw. wie auch beim Schnappkäfig 2 nach der ersten Ausführung) aus einem Hochleistungskunststoff hergestellt, wie beispielsweise Polyetheretherketon (PEEK), Polyetherketon (PEK), Polyphenylensulfid (PPS), Polyamidimid (PAI) oder Polyimid (PI).

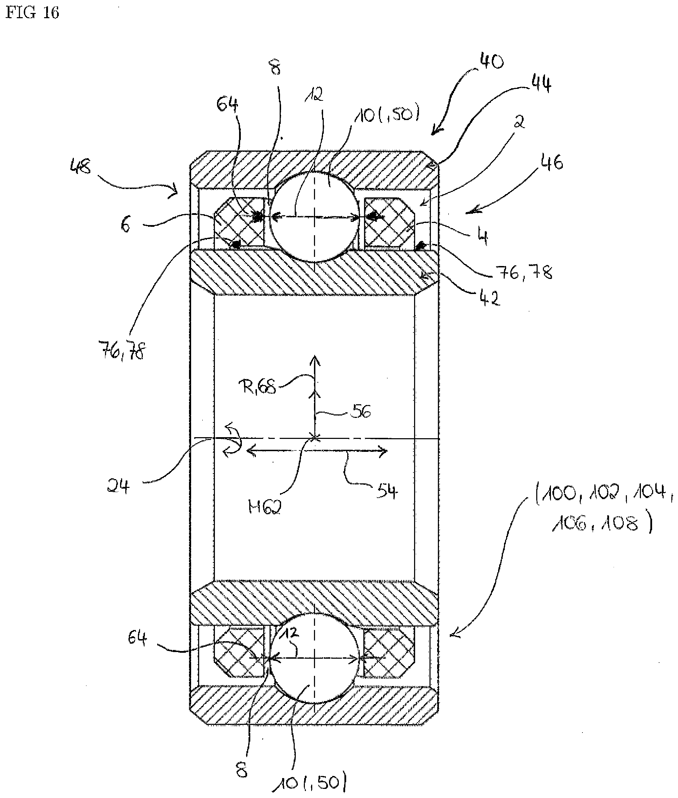

FIG 16 zeigt (übereinstimmend mit dem bzw. wie auch beim Schnappkäfig 2 nach der ersten Ausführung) das einreihige Radial-Rillenkugellager 40 mit dem die Kugeln 10 in Position haltenden eingebauten Schnappkäfig 2 - zwischen einem inneren Laufring 42 sowie einem äußeren Laufring 44. Der Schnappkäfig 2 ist (übereinstimmend mit dem bzw. wie auch beim Schnappkäfig 2 nach der ersten Ausführung) als Innenring-geführter Kugellager-Käfig 2 ausgeführt, d. h., der Innenumfang 36, 38 des Schnappkäfigs 2 bzw. die Innenumfänge 36, 38 der beiden Käfighälften 4, 6 gleitet auf einem Außenumfang 76 des inneren Laufringes 42.

Durch die Tatsache, dass dabei (übereinstimmend mit dem bzw. wie auch beim Schnappkäfig 2 nach der ersten Ausführung) jede Käfighälfte 4, 6 des Schnappkäfigs 2 separat auf einer Innenringschulter 78 des inneren Laufrings 42 bei dem einreihigen Radial-Rillenkugellager 40 geführt werden kann, können auftretende Schwingungen in vorteilhafter Weise gedämpft werden.

Der äußere Laufring 44 und der innere Laufring 42 des einreihigen Radial-Rillenkugellagers 40 sind (übereinstimmend mit dem bzw. wie auch beim Schnappkäfig 2 nach der ersten Ausführung) aus Chromstahl gefertigt, wie beispielsweise aus 100Cr6 (Werkstoff-Nr. 1.3505), ein Stahl mit einem Gehalt von ca. 1 % Kohlenstoff und 1,5 % Chrom.

Bei der Montage 100 des einreihigen Radial-Rillenkugellagers 40 werden (übereinstimmend mit dem bzw. wie auch beim Schnappkäfig 2 nach der ersten Ausführung) zunächst die Kugeln 10 aneinander anliegend in den äußeren Laufring 44 eingebracht 102. Anschließend wird der innere Laufring 42 zunächst aus einer exzentrischen Position in den äußeren Laufring 44 eingefügt und dann in eine in etwa konzentrische Position in dem äußeren Laufring 44 gebracht 104.

Weiter werden dann die Kugeln 10 so verteilt, dass sie zueinander in der Umfangrichtung 24 in etwa gleiche Abstände haben 106.

Nachfolgend diesem werden die zwei Käfighälften 4, 6 nacheinander von beiden Seiten 46, 48 her zwischen dem inneren und dem äußeren Laufring 42, 44 eingeführt, wobei sie gegeneinander in den Kugelsatz 50 einschnappen 108.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 2: (zweiteiliger) Kugellager-Käfig, (zweiteiliger) Schnappkäfig
- 4: (erstes) Käfigteil, (erste) Käfighälfte
- 6: (zweites) Käfigteil, (zweite) Käfighälfte
- 8: Kugeltasche
- 10: Kugel
- 12: Kugeldurchmesser
- 14: ringförmiger Körper/Käfigrücken des/der ersten Käfigteils/-hälfte 4
- 16: ringförmiger Körper/Käfigrücken des/der zweiten Käfigteils/-hälfte 6
- 18: Steg
- 20: Abstand, Kreisbogenlänge (zwischen zwei benachbarten Stegen 18 einer Käfighälfte/-teils 4, 6)
- 22: Breite eines Steges 18, Erstreckung eines Steges 18 entlang eines Kreisbogens (Kreisbogenlänge) in Umfangsrichtung 24
- 24: Umfangsrichtung des (zweiteiligen) Kugellager-Käfigs 2 bzw. des (zweiteiligen) Schnappkäfigs 2 bzw. der Käfighälfte 4, 6 bzw. des Kugellagers 40
- 26: Außenfläche
- 28: zylindrische Außenfläche
- 30: konische Außenfläche
- 32: Außenumfang des/der ersten Käfigteils/-hälfte 4 bzw. des (zweiteiligen) Kugellager-Käfigs 2 bzw. des (zweiteiligen) Schnappkäfigs 2 bzw. des Kugellagers 40
- 34: Außenumfang des/der zweiten Käfigteils/-hälfte 6 bzw. des (zweiteiligen) Kugellager-Käfigs 2 bzw. des (zweiteiligen) Schnappkäfigs 2 bzw. des Kugellagers 40
- 36: Innenumfang des/der ersten Käfigteils/-hälfte 4 bzw. des (zweiteiligen) Kugellager-Käfigs 2 bzw. des (zweiteiligen) Schnappkäfigs 2 bzw. des Kugellagers 40
- 38: Innenumfang des/der zweiten Käfigteils/-hälfte 6 bzw. des (zweiteiligen) Kugellager-Käfigs 2 bzw. des (zweiteiligen) Schnappkäfigs 2 bzw. des Kugellagers 40
- 40: Kugellager, (einreihiges) Radial-Rillenkugellager
- 42: innerer Laufring
- 44: äußerer Laufring
- 46: erste Seite des Kugellagers 40
- 48: zweite Seite des Kugellagers 40
- 50: Kugelsatz
- 52: Konuswinkel
- 54: Axialrichtung, Breitenrichtung
- 56: Radialrichtung
- 58: axiale Mitte einer Kugeltasche 8
- 60: mittlere radiale Höhe eines Steges 18
- 62: Mittelpunkt M des (zweiteiligen) Kugellager-Käfigs bzw. des (zweiteiligen) Schnappkäfigs 2 bzw. des Kugellagers 40
- 64: Breite einer Kugeltasche 8 (in Axial-/Breitenrichtung 54)
- 66: Wandung einer Kugeltasche 8
- 68: Radius R
- 70: Verlängerung
- 72: Abstand, Kreisbogenlänge (zwischen zwei benachbarten Stegen 18 einer Käfighälfte/-teils 4, 6 an dessen Außenumfang)
- 74: Abstand, Kreisbogenlänge (zwischen zwei benachbarten Stegen 18 einer Käfighälfte/-teils 4, 6 an dessen Innenumfang)
- 76: Außenumfang des inneren Laufrings 42
- 78: Innenringschulter des inneren Laufrings 42

- 100: Verfahren zur Montage des Kugellagers 40
- 102: Einbringen der Kugeln 10
- 104: Einbringen und Zentrieren des inneren Laufrings 42
- 106: Verteilen der Kugeln 10
- 108: Nacheinander-Einführen der zwei Käfigteile/-hälften 4, 6 und Einschnappen in den Kugelsatz 50

## Patentansprüche

1. Zweiteiliger Kugellager-Käfig (2) mit zwei, insbesondere zumindest im Wesentlichen identischen, Käfigteilen (4, 6) ausbildend eine geradzahlige Mehrzahl von Kugeltaschen (8) zur Aufnahme von einer entsprechenden Anzahl von Kugeln (10) mit einem vorgebbaren Kugeldurchmesser (12), wobei jedes Käfigteil (4, 6) einen ringförmigen Körper (14, 16) aufweist, an welchem in Umfangsrichtung (24) im Wesentlichen gleichmäßig verteilte Stege (18) zur Ausbildung der Kugeltaschen (8) angeordnet sind, und wobei ein Abstand (20) jeweils zwei in der Umfangsrichtung (24) benachbarter Stege (18) in Umfangrichtung (24) in etwa der Summe aus dem zweifachen Kugeldurchmesser (12) und einer Breite (22) des Steges (18) in der Umfangsrichtung (24) entspricht,
**dadurch gekennzeichnet,**
**dass** zumindest ein Käfigteil (4, 6) in der Axialrichtung (54) eine konische Außenfläche (26, 30) an den Stegen (18) aufweist.

2. Zweiteiliger Kugellager-Käfig (2) nach Anspruch 1,
**dadurch gekennzeichnet,**
**dass** jedes Käfigteil (4, 6) in der Axialrichtung (54) eine konische Außenfläche (26, 30), insbesondere mit einem Konuswinkel (52) zwischen in etwa 2° und in etwa 20°, insbesondere zwischen in etwa 7° und in etwa 12°, aufweist.

3. Zweiteiliger Kugellager-Käfig (2) nach mindestens einem der voranstehenden Ansprüche,
**dadurch gekennzeichnet,**
**dass** zumindest ein Käfigteil (4, 6) zumindest teilweise aus Kunststoff, insbesondere aus Polyetheretherketon (PEEK), Polyetherketon (PEK), Polyphenylensulfid (PPS), Polyamidimid (PAI), Polyimid (PI) oder Phenolharz (PF), insbesondere Baumwollgewebe-verstärktes Phenolharz (PF), besteht.

4. Zweiteiliger Kugellager-Käfig (2) nach mindestens einem der voranstehenden Ansprüche,
**dadurch gekennzeichnet,**
**dass** die zwei Käfigteile (4, 6) aus dem gleichen Material oder aus den gleichen Materialien bestehen oder dass die zwei Käfigteile (4, 6) zumindest teilweise oder im Gesamten aus unterschiedlichen Materialien bestehen.

5. Zweiteiliger Kugellager-Käfig (2) nach mindestens einem der voranstehenden Ansprüche,
**dadurch gekennzeichnet,**
**dass** ein Abstand (72) der jeweils zwei in der Umfangsrichtung (24) benachbarten Stege (18) in der Umfangrichtung (24) an einem Außenumfang (32, 34) des Käfigteils (4, 6) größer ist als der Abstand (74) an einem Innenumfang (36, 38) des Käfigteils (4, 6).

6. Verfahren zur Herstellung eines zweiteiligen Kugellager-Käfigs (2) nach mindestens einem der voranstehenden Ansprüche, wobei der zweiteilige Kugellager-Käfig (2) durch spanende Formgebung, durch additive Fertigung, insbesondere durch 3-D-Druck, oder durch Spritzgießen hergestellt wird.

7. Verwendung eines zweiteiligen Kugellager-Käfig (2) nach mindestens einem der voranstehenden Ansprüche 1 bis 5, in einem einreihigen Radial-Rillenkugellager (40).

8. Kugellager (40) mit einem inneren Laufring (42), einem äußeren Laufring (44), einer Vielzahl von den Kugeln (10) mit dem vorgebbaren Kugeldurchmesser (12) und dem zweiteiligen Kugellager-Käfig (2) nach mindestens einem der voranstehenden Ansprüche 1 bis 5,
**dadurch gekennzeichnet,**
**dass** die Vielzahl der Kugeln (10) der Anzahl der durch den zweiteiligen Kugellager-Käfig (2) ausgebildeten Kugeltaschen (8) entsprechen ("Kugelsatz" 50) und jeweils eine von den Kugeln (10) in eine von den Kugeltaschen (8) aufgenommen ist.

9. Kugellager (40) nach Anspruch 8,
**dadurch gekennzeichnet,**
**dass** die Kugeln (10) den vorgebbaren Kugeldurchmesser (12) von kleiner als 5 mm aufweisen.

10. Dentalgerät, insbesondere Dentalturbine, aufweisend ein Kugellager (40) nach Anspruch 8 oder Anspruch 9.

## Claims

1. Two-part ball bearing cage (2) with two, in particular at least substantially identical, cage parts (4, 6) realizing an even-numbered plurality of ball pockets (8) for receiving a corresponding number of balls (10) with a predefinable ball diameter (12), wherein each cage part (4, 6) comprises a ring-shaped body (14, 16) on which webs (18) distributed substantially uniformly in a circumferential direction (24) are arranged for the purposes of realizing the ball pockets (8), and wherein a distance (20) in the circumferential direction (24) between in each case two webs (18) which are adjacent in the circumferential direction (24) corresponds approximately to the sum of twice the ball diameter (12) and a width (22) of the web (18) in the circumferential direction (24),
**characterized in that**
at least one cage part (4, 6) has a conical outer surface (26, 30) on the webs (18) in the axial direction (54).

2. Two-part ball bearing cage (2) according to Claim 1,
**characterized in that**
each cage part (4, 6) has a conical outer surface (26, 30) in the axial direction (54), in particular with a cone angle (52) between approximately 2° and approximately 20°, in particular between approximately 7° and approximately 12°.

3. Two-part ball bearing cage (2) according to at least either of the preceding claims,
**characterized in that**
at least one cage part (4, 6) consists at least in part of plastics material, in particular of polyether ether ketone (PEEK), polyether ketone (PEK), polyphenylene sulfide (PPS), polyamidimide (PAI), polyimide (PI) or phenol resin (PF), in particular cotton-fabric-reinforced phenol resin (PF).

4. Two-part ball bearing cage (2) according to at least one of the preceding claims,
**characterized in that**
the two cage parts (4, 6) consist of the same material or of the same materials or **in that** the two cage parts (4, 6) consist at least in part or completely of different materials.

5. Two-part ball bearing cage (2) according to at least one of the preceding claims,
**characterized in that**
a distance (72) between the in each case two webs (18) adjacent in the circumferential direction (24) is greater on an outer circumference (32, 34) of the cage part (4, 6) in the circumferential direction (24) than the distance (74) on an inner circumference (36, 38) of the cage part (4, 6).

6. Method for producing a two-part ball bearing cage (2) according to at least one of the preceding claims, wherein the two-part ball bearing cage (2) is produced by shape cutting, by additive manufacturing, in particular by 3D printing, or by injection moulding.

7. Use of a two-part ball bearing cage (2) according to at least one of preceding Claims 1 to 5, in a single-row radial deep groove ball bearing (40).

8. Ball bearing (40) with an inner raceway (42), an outer raceway (44), a plurality of balls (10) with the predefinable ball diameter (12) and the two-part ball bearing cage (2) according to at least one of preceding Claims 1 to 5,
**characterized in that**
the plurality of balls (10) corresponds to the number of ball pockets (8) configured by the two-part ball bearing cage (2) ("ball set" 50) and in each case one of the balls (10) is received in one of the ball pockets (8).

9. Ball bearing (40) according to Claim 8,
**characterized in that**
the balls (10) comprise the predefinable ball diameter (12) of less than 5 mm.

10. Dental instrument, in particular dental turbine, having a ball bearing (40) according to Claim 8 or Claim 9.

## Revendications

1. Cage (2) de roulement à billes en deux parties ayant deux parties de cage (4, 6), notamment au moins sensiblement identiques, formant un nombre pair de logements de billes (8) pour recevoir un nombre correspondant de billes (10) ayant un diamètre (12) de bille prédéterminé, chaque partie de cage (4, 6) présentant un corps annulaire (14, 16) sur lequel sont agencées des nervures (18) qui sont réparties de façon sensiblement régulière dans la direction circonférentielle (24) pour former des logements de billes (8), une distance (20) entre deux nervures (18) adjacentes respectives dans la direction circonférentielle (24) correspondant dans la direction circonférentielle (24) à environ la somme de deux fois le diamètre (12) de bille et à une largeur (22) de la nervure (18) dans la direction circonférentielle (24), **caractérisée en ce qu'**au moins une partie de cage (4, 6) présente au niveau des nervures (18) une surface extérieure conique (26, 30) dans la direction axiale (54).

2. Cage (2) de roulement à billes en deux parties selon la revendication 1, **caractérisée en ce que** chaque partie de cage (4, 6) présente une surface extérieure conique (26, 30) dans la direction axiale (54), notamment avec un angle de cône (52) compris entre environ 2° et environ 20°, notamment entre environ 7° et environ 12°.

3. Cage (2) de roulement à billes en deux parties selon au moins l'une des revendications précédentes, **caractérisée en ce qu'**au moins une partie de cage (4, 6) est réalisée au moins partiellement en matière plastique, notamment en polyétheréthercétone (PEEK), polyéthercétone (PEK), sulfure de polyphénylène (PPS), polyamideimide (PAI), polyimide (PI) ou résine phénolique (PF), en particulier en une résine phénolique renforcée de tissu de coton (PF).

4. Cage à billes en deux parties (2) selon au moins l'une des revendications précédentes, **caractérisée en ce que** les deux parties de cage (4, 6) sont constituées du même matériau ou des mêmes matériaux ou **en ce que** les deux parties de cage (4, 6) sont au moins partiellement ou entièrement constituées de matériaux différents.

5. Cage à billes en deux parties (2) selon au moins l'une des revendications précédentes, **caractérisée en ce qu'**un écartement (72) dans le sens circonférentiel (24) entre les deux nervures (18) adjacentes dans le sens circonférentiel (24) sur une circonférence extérieure (32, 34) de la partie de cage (4, 6) est supérieur à l'écartement (74) sur une circonférence intérieure (36, 38) de la partie de cage (4, 6) .

6. Procédé de réalisation d'une cage (2) de roulement à billes en deux parties selon au moins l'une des revendications précédentes, dans lequel la cage (2) de roulement à billes en deux parties est réalisée par usinage, par fabrication additive, notamment par impression 3D, ou par moulage par injection.

7. Utilisation d'une cage (2) de roulement à billes en deux parties selon au moins l'une des revendications précédentes 1 à 5, dans un roulement à billes à gorge profonde radiale à une rangée (40).

8. Roulement à billes (40) avec une bague intérieure (42), une bague extérieure (44), une pluralité de billes (10) ayant un diamètre (12) de bille prédéterminé et la cage (2) de roulement à billes en deux parties selon au moins l'une des revendications précédentes 1 à 5,
**caractérisé en ce que**
la pluralité de billes (10) correspond au nombre de logements de billes (8) formés par la cage (2) de roulement à billes en deux parties ("jeu de billes" 50) et une bille (10) respective est logée dans l'un des logements à billes (8).

9. Roulement à billes (40) selon la revendication 8, **caractérisé en ce que** les billes (10) présentent un diamètre (12) de billes prédéterminé inférieur à 5 mm.

10. Dispositif dentaire, notamment turbine dentaire, comportant un roulement à billes (40) selon la revendication 8 ou la revendication 9.
